(19) Europäisches Patentamt
European Patent Office
Office européen des brevets

(11) EP 1 498 768 A1

(12) EUROPEAN PATENT APPLICATION
published in accordance with Art. 158(3) EPC

(43) Date of publication:
19.01.2005 Bulletin 2005/03

(21) Application number: 03725599.9

(22) Date of filing: 18.04.2003

(51) Int Cl.7: G02F 1/00

(86) International application number:
PCT/JP2003/004945

(87) International publication number:
WO 2003/091794 (06.11.2003 Gazette 2003/45)

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 24.04.2002 JP 2002122723

(71) Applicant: NITTO DENKO CORPORATION
Ibaraki-shi, Osaka 567-8680 (JP)

(72) Inventors:
- Hara, Kazutaka
  Ibaraki-shi, Osaka 567-8680 (JP)
- Takahashi, Naoki
  Ibaraki-shi, Osaka 567-8680 (JP)
- Miyatake, Minoru
  Ibaraki-shi, Osaka 567-8680 (JP)

(74) Representative: Müller-Boré & Partner
Patentanwälte
Grafinger Strasse 2
81671 München (DE)

# (54) LIGHT CONVERGING SYSTEM AND TRANSMISSION LIQUID CRYSTAL DISPLAY

(57) A light condensing system of this invention comprising: a backlight system having a light source and a first light condensing section (X) capable of condensing emitted light from the light source within ±60° of the front direction; and a light condensing film with no patterned structure as a second light condensing element (Y). The light condensing system effectively shield light passing-through in an oblique direction to thereby suppress uncomfortable coloring, present a good display, realize cost reduction.

FIG.11

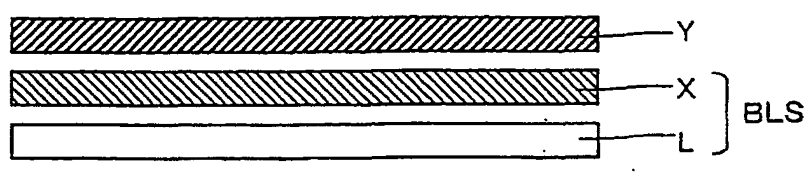


EP 1 498 768 A1

## Description

Technical Field

The present invention relates to a light condensing system and a transmission liquid crystal display.

Background Art

There has been known a technique in which lights from a diffusion light source are condensed in the front direction employing an evaporation band pass filter using a Brewstars angle (for example, see the specification of GP No. 3836995 A), or an optical film having an angle dependency with respect to a transmittance and a reflectance, such as a selective reflection characteristic of a cholesteric liquid crystal using Bragg reflection (for example, see publications of JP-A Nos. 2-158289, 6-235900, 10-321025 and the like). With such optical films employed, a filter can be manufactured that alters a reflectance according to an incidence angle and that transmits light only through the front thereof in a proper optical design. Light that cannot be transmitted therethrough is not absorbed but reflected thereon returns back to the light source side and is recycled, thereby enabling a high efficiency light condensation characteristic to be achieved.

Light collimation of the methods can be designed so as to obtain a high parallelism and lights can be condensed and collimated within a narrow range of ±20° or less of the front direction. This is a high level that cannot be acquired by a conventional backlight system with a prism sheet or microdot array alone.

A light shielding percentage of the light condensing films is not perfect and a residual transmitted light in an oblique direction has been recognized. In a case where a shield wavelength bandwidth is narrow, problems have occurred that a secondary transmission occurs in an oblique direction which results in light passing-through in an oblique direction only to be wasteful and, in addition, that coloring occurs because transmittance is different according to a wavelength.

For example, in a case of a bright line type light condensing element in which a band pass filter and a bright line light source are combined, a necessary bright line is transmitted only through the front but shield in an oblique direction, whereas since three transmission wavelengths are available, there has arisen a problem that with a large incidence angle, a region transmitting green light in the front shifts up to a blue bright-line region and thereby transmits blue light. There has further arisen a problem that a region transmitting red light shifts up to a green bright line region and thereby transmits green light.

Proposal has been made of light condensation and collimation with a bright line light source, an interference film band pass filter and the like (for example, see the specification of USP No. 4984872 and the specification of USP No. 2002/36735 A and the specification of USP No. 6307604 and other). All of the patent literatures, however, limit its description only to an effect of the vicinity of the front but have given no solution to a problem of secondary transmission at a large incidence angle.

No influence of a bright line is exerted on a total reflection light condensing element obtained by a combination of reflection polarizers and a retardation plate. With a large incidence angle, however, the element has had a problem similar to that of a bright light type condensing element with respect to occurrence of a blue shift of a reflection characteristic and requires a performance of a reflection characteristic in an infrared region in a case of front incidence in order to maintain sufficient shielding. Besides, the reflection polarizers are necessary to function all over the wavelength band so as to enable a characteristic of a retardation plate sandwiched therebetween to be covered.

The two kinds of light condensing elements described above have not been able to cut off incidence light sufficiently at a large angle when each is used alone because of the problems. Therefore, a wavelength characteristic of a transmission component is not uniform, resulting in uncomfortable coloring.

It is possible to shield secondary transmission in design of a light condensing film. In order to realize the shielding with a multilayer laminate structure composed of materials having respective different refractive indexes and retardation values, the number of layers of the laminate structure increases, having caused a cost up. In a case where shielding of secondary transmission is to be realized with a cholesteric liquid crystal, a thickness of a liquid crystal layer increases, again having led to a cost up. In addition to the cost ups, there have arisen worries about adverse influences on reliability or appearance originating from an internal residual stress due to increase in thickness of an optically functioning layer.

It is an object to provide a light condensing system capable of effectively shielding passing-through in an oblique direction, suppressing uncomfortable coloring, presenting a good display and reducing a cost.

It is another object to provide a transmission liquid crystal display using the light condensing system.

Disclosure of the Invention

The present inventors have been conducted serious studies in order to solve the task with a resulted discovery of the following transmission liquid crystal display, leading to completion of the present invention. That is, the present invention is as follows:

1. A light condensing system comprising:

a backlight system having a light source and a first light condensing section (X) capable of condensing emitted light from the light source within ±60° of the front direction; and
a light condensing film with no patterned structure as a second light condensing element (Y).

2. The light condensing system according to above description 1, wherein
the backlight system having the first light condensing section (X) is a light source and a microprism sheet array disposed on the light source.
3. The light condensing system according to above description 1, wherein
the backlight system having the first light condensing section (X) is a miroprism formed light guide combined with a light source.
4. The light condensing system according to above description 1, wherein
the backlight system having the first light condensing section (X) is a formed light guide combined with a light source.
5. The light condensing system according to any of above descriptions 1 to 4, wherein
the light condensing film used as the second light condensing element (Y) has no patterned structure; therefore, neither a moiré nor an interference fringe occurs between the light condensing film and a regular pattern of another optical member by applying the light condensing film to a liquid crystal cell when optical observation is conducted from the front side (a viewer side).
6. The light condensing system according to any of above descriptions 1 to 5, wherein
the light condensing film used as the second light condensing element (Y) is a polarization element (A) in a structure in which a retardation layer (b) is disposed between at least two reflection polarizers (a) having respective polarized light selective reflection wavelength bands superimposing on each other.
7. The light condensing system according to above description 6, wherein
a reflection polarizer (a) is a circular polarization type reflection polarizer (a1) transmitting circularly polarized light but selectively reflecting a reverse circularly polarized light and
a retardation layer (b) has a retardation layer (b1) having a front retardation (in the normal direction) of almost zero and a retardation of λ/8 or more relative to incident light incoming in a direction inclined from the normal direction by 30° or more.
8. The light condensing system according to above description 6, wherein
the reflection polarizer (a) is a linear polarization type reflection polarizers (a2) transmitting one of linearly polarized lights perpendicular to each other, but selectively reflecting the other thereof,
the retardation layer (b) comprises a retardation layer (b1) having a front retardation (in the normal direction) of almost zero and a retardation of λ/4 or more relative to incident light incoming at a direction inclined from the normal direction by 30° or more,
layers (b2) each having a front retardation of about λ/4 disposed on both sides of the retardation layer (b1), one of the layers (b2) being disposed between the retardation layer (b1) and a corresponding linear polarization type reflection polarizer (a2) and the other of the layers (b2) being disposed between the retardation layer (b1) and another linear polarization type reflection polarizer (a2),
the layer (b2) on the incidence side is arranged at an angle of 45° (-45°) ±5° relative to the polarization axis of the linear polarization type reflection polarizer (a2) on the incidence side,
the layer (b2) on the emission side is arranged at an angle of - 45° (45°) ± 5° relative to the polarization axis of the linear polarization type reflection polarizer (a2) on the emission side, and
the layer (b2) on the incidence side and the layer (b2) on the emission side are arranged at an arbitrary angle formed between the respective slow axes thereof.
9. The light condensing system according to above description 6, wherein
the reflection polarizers (a) is a linear polarization type reflection polarizers (a2) each transmitting one of linearly polarized lights perpendicular to each other, but selectively reflecting the other thereof,
the retardation layer (b) comprises two biaxial retardation layers (b3) each having a front retardation of about λ/ 4 and an Nz factor of 2 or more,
the slow axis direction of the layer (b3) on the incidence side is arranged at an angle of 45° (-45°) ±5° relative

to the polarization axis of the linear polarization type reflection polarizer (a2) on the incidence side,

the slow axis direction of the layer (b3) on the emission side is arranged at an angle of -45° (+45°) ±5° relative to the polarization axis of the linear polarization type reflection polarizer (a2) on the emission side, and

the layer (b3) on the incidence side and the layer (b3) on the emission side are arranged at an arbitrary angle formed between the respective slow axes thereof.

10. The light condensing system according to above description 6, wherein

the reflection polarizers (a) is a linear polarization type reflection polarizers (a2) each transmitting one of linearly polarized lights perpendicular to each other, but selectively reflecting the other thereof,

the retardation layer (b) comprises one biaxial retardation layer (b4) having a front retardation of about λ/2 and an Nz factor of 1.5 or more,

the slow axis direction of the layer on the incidence side is arranged at an angle of 45° (-45°) ±5° relative to the polarization axis of the linear polarization type reflection polarizer (a2) on the incidence side,

the slow axis direction of the layer on the emission side is arranged at an angle of -45° (45°) ±5° relative to the polarization axis of the linear polarization type reflection polarizer (a2) on the emission side, and

the polarization axes of the two linear polarization type reflection polarizers (a2) are almost perpendicular to each other.

11. The light condensing system according to any of above descriptions 1 to 5,

wherein the light condensing film used as the second light condensing element (Y) is a band pass filter and the light source has a bright line spectrum.

12. The light condensing system according to above description 11, wherein

the band pass filter is an evaporation-deposited multilayer film band pass filter.

13. The light condensing system according to above description 11, wherein

the band pass filter is a cholesteric liquid crystal band pass filter.

14. The light condensing system according to above description 11, wherein

the band pass filter is a band pass filter constituted of a stretched film from a base material extruded in multilayer laminate made of resin materials having respective different refractive indexes.

15. The light condensing system according to above description 11, wherein

the band pass filter is a band pass filter constituted of a thin multilayer precision coating film made of resin materials having respective different refractive indexes.

16. A transmission liquid crystal display comprising at least:

a light condensing system according to any of above descriptions 1 to 15;
a liquid crystal cell transmitting collimated lights; and
polarization plates disposed on both sides of the liquid crystal cell.

(Action)

The above light condensing system can dramatically reduce a transmission component at a large angle and thereby eliminate uncomfortable coloring by combination of a backlight system having a first light condensing section (X) within ±60° of the front direction and a second light condensing element (Y) having an angular range of light condensation narrower than the first light condensing section (X).

Generally, secondary transmission of a second light condensing element (Y) constituted of a bright light source and an interference filter combined, or secondary transmission of a second light condensing element (Y) using a polarization element (A) constituted of reflection polarizers (a) and a retardation layer (b) combined is generated at a large angle relative to the normal direction. Therefore, employed in the present invention, as shown in Figs. 11 and 12, is a light condensing system constituted of a backlight system (BLS) having the first light condensing section (X) and the second light condensing element (Y) combined. In Fig. 11, the first light condensing section (X) and a light source (L) are provided separately from each other. A prism sheet or the like is exemplified as the first light condensing section (X) shown in Fig. 11. In Fig. 12, the first light condensing section (X) is built in the light source (L) to form the backlight system (BLS). First condensation of emitted light from the light source is effected by the first light condensing section (X) to thereby reduce incident light incoming at a large angle in an oblique direction. Thereby, the second light condensing element (Y) is harder to have an influence of leakage light in a region short of shielding, thereby enabling uncomfortable coloring in the oblique direction to be reduced. In a region high in parallelism in the vicinity of the front, the light subjected to first light condensation is further narrowed by second light condensation with the second light condensing element (Y) to thereby obtain high purity collimated light. Figs. 13 and 14 is a transmission liquid crystal display using a light condensing system of Fig. 11 or 12. Polarization plates (PL) are disposed on both sides of a liquid crystal cell (LC). The light condensing system described above is arranged so that the second light condensing element (Y) is disposed on the side of the liquid crystal cell (LC). Note that in Figs. 13 and 14, the second light condensing

element (Y) is laminated to the liquid crystal cell (LC).

Note that generally a conventional first light condensing means has a patterned structure, light condensation is achieved only up to a range of the order of within ±50° and has been difficult to be further narrowed to more of sharpness. On the other hand, while the second light condensing means can narrow light sharply, a leakage of a secondary peak is observed.

In a light condensing system of the present invention, first light condensation to be required in the first light condensing section (X) is within ±60° and desirably within ±50°. This is because secondary transmission of a light condensing film used as the second light condensing element (Y) is observed generally in the range of from 60 to 70° as shown in Fig.21. By combining with a light source generating substantially no emitted light at an angle at which the secondary transmission component is generated, the secondary transmission can be effectively shielded to thereby efficiently reuse required light outgoing to outside a display viewing angle range in essence because of secondary transmission. Note that a graph shown in Fig. 21 is a measurement result of a light condensation characteristic in a case where a cholesteric liquid crystal band pass filter described in Example 2 is employed as a second light condensing element (Y) in a structure of Fig. 15. A liquid crystal cell (LC), a light source (L) and polarizers (PL) in use are similar to those in Example 2. Note that measurement of a light condensation characteristic was conducted with respect to an emitted light characteristic with Ez-Contrast manufactured by ELDIM. The ordinate of Fig. 21 is assigned to a brightness (in candela) and the abscissa is used for plotting the values of an angle relative to the front direction of emitted light from the light source. Measurement results of a light condensation characteristic in the present invention are all achieved by means of such a measurement method.

Brief Description of the Drawings

Fig. 1 is a conceptional representation showing an example of the fundamental principle for collimation of a polarization element (A).

Fig. 2 is diagrams describing each of the states of lights in Figs. 1, 3, 4, 6 and 8.

Fig. 3 is a conceptional view showing conversion of linearly polarized light to circular polarization.

Fig. 4 is a conceptional representation showing an example of the fundamental principle of collimation of a polarization element (A).

Fig. 5 is an example showing arrangement angles of each of the layers for collimation using a linear polarization type reflecting polarization element (a2).

Fig. 6 is a conceptional representation showing an example of the fundamental principle for collimation of a polarization element (A).

Fig. 7 is an example showing arrangement angles of each of the layers for collimation using a linear polarization type reflecting polarization element (a2).

Fig. 8 is a conceptional representation showing an example of the fundamental principle for collimation of a polarization element (A).

Fig. 9 is an example showing arrangement angles of each of the layers for collimation using a linear polarization type reflecting polarization element (a2).

Fig. 10 is a conceptional representation showing a direct solution of a moiré.

Fig. 11 is an example of schematic view of a light condensing system of the present invention.

Fig. 12 is an example of schematic view of a light condensing system of the present invention.

Fig. 13 is an example of schematic view of a transmission liquid crystal display of the present invention.

Fig. 14 is an example of schematic view of a transmission liquid crystal display of the present invention.

Fig. 15 is a schematic view of a transmission liquid crystal display when a light condensation characteristic of a second light condensing element (Y) alone is measured in Examples 1 and 2.

Fig. 16 is a schematic view of a transmission liquid crystal display in Examples 1 and 2.

Fig. 17 is a schematic view of a transmission liquid crystal display when a light condensation characteristic of a second light condensing element (Y) alone is measured in Example 3.

Fig. 18 is a schematic view of a transmission liquid crystal display in Example 3.

Fig. 19 is a schematic view of a transmission liquid crystal display when a light condensation characteristic of a second light condensing element (Y) alone is measured in Example 4.

Fig. 20 is a schematic view of a transmission liquid crystal display in Example 4.

Fig. 21 is a graph showing a light condensation characteristic of a second light condensing element (Y) alone in Example 2.

Fig. 22 is a graph showing a wavelength characteristic of a second light condensing element (Y) in Example 1.

Fig. 23 is a graph showing a light condensation characteristic of a second light condensing element (Y) alone in Example 1.

Fig. 24 is a graph showing a light condensation characteristic in a case where a backlight system having a

first light condensing section (X) and a second light condensing element (Y) are combined in Example 1.

Fig. 25 is a graph showing a wavelength characteristic of a second light condensing element (Y) in Example 2.

Fig. 26 is a graph showing a light condensation characteristic in a case where a backlight system having a first light condensing section (X) and a second light condensing element (Y) are combined in Example 2.

Fig. 27 is a graph showing a wavelength characteristic of a second light condensing element (Y) in Example 3.

Fig. 28 is a graph showing a light condensation characteristic in a case where a backlight system having a first light condensing section (X) and a second light condensing element (Y) are combined in Example 3.

Fig. 29 is a graph showing a wavelength characteristic of a second light condensing element (Y) in Example 4.

Fig. 30 is a graph showing a light condensation characteristic in a case where a backlight system having a first light condensing section (X) and a second light condensing element (Y) are combined in Example 4.

Best Mode for Carrying Out the Invention

A light condensing system of the present invention has a backlight system including a light source (L) and a first light condensing section (X). Either of a direct under type backlight and a side type backlight can be adopted as the light source (L). The side type backlight has a light guide plate. The first light condensing section (X) may be either placed on the light source (L) or incorporated in the light source (L).

As the first light condensing section (X), exemplified is a microprism sheet array. Further exemplified are a microprism formed light guide combined with a light source, a microdot formed light guide combined with a light source, and the like. Still further, exemplified is a combination thereof. To be concrete, as a backlight system having a first light condensing section (X), examples thereof that are preferably used include: a light guide plate high in directivity, obtained by carving a microprism array and a microdot array on a surface of a wedge-shaped light guide, and having a range of emitted light confined in the vicinity of the front; and a backlight system in which emitted light is confined in the front direction with a microprism sheet.

Any of backlight systems each having the first light condensing section (X) may be used without placing a specific limitation on anything as far as it has a characteristic that emitted light from a light source is condensed within ±60° relative to the front direction. Therefore, any backlight system having a first light condensing section (X) can be set with respect to arrangement thereof, as far as it has the light condensing characteristic, without placing a specific limitation on a kind of a light source, a kind of a light guide plate, a material or the like of a prism light condensing sheet serving as a first light condensing section (X) and arrangement thereof can be properly set.

In a backlight system having a first light condensing section (X), it is determined whether or not the system has a characteristic that emitted light from a light source is condensed within ±60° relative to the front direction in the following way. That is, measurement of a light condensation characteristic in a backlight system having a first light condensing section (X) is conducted by means of a method similar to that as described above (whereas a first light condensing section (X) is used instead of a second light condensing element (Y)). Herein, a characteristic condensing emitted light within ±60° of the front direction is of a case where in connection with a brightness value as measured when an angle relative to the front direction of emitted light is altered, an angle at which a brightness value takes a half value the maximum brightness value as a reference in the front direction lies within ±60° of the front direction.

On the other hand, a light condensing film used as a second light condensing element (Y) in use has no patterned structure. Since the light condensing film has no patterned structure, neither a moiré nor an interference fringe occurs with a regular pattern of one of other optical members when optical observation is conducted from the front side (a viewer side) in a case where the light condensing film is applied to a liquid crystal cell.

A determination on whether or not a light condensing film used as a second light condensing element (Y) interferes with a regular pattern of one of other optical members to produce a moiré or an interference fringe when an optical observation is conducted from the front side (the viewer side) can be made, for example, by laminating polarization plates on both sides of a liquid crystal cell (TFT liquid crystal display cell) and rotating a composite member obtained by laminating the light condensing film on the backlight side to then visually observe it.

Any of light condensing films used as such a second light condensing element (Y) can be employed without placing a specific limitation on either a material or a way of manufacture thereof. For example, in a case where a light condensing film is combined with a light source having a bright-line spectrum, a band pass filter is used as the light condensing film. On the other hand, without placing a limitation on a kind of a light source, a polarization element (A) in a structure in which a retardation layer (b) is disposed between at least two reflection polarizers (a) having respective polarization light selective reflection wavelength bands superimposing on each other can be used as the light condensing film. Note that while both cases are optical systems in which secondary transmission occurs in the vicinity of the angular range of 60 to 70°, the secondary transmission can be prevented adopting a structure of the present invention.

Examples of band pass filters that can be preferably used include: an evaporation-deposited multilayer film band pass filter; a cholesteric liquid crystal band pass filter; a band pass filter constituted of a stretched film from a base material extruded in multilayer laminate made of resin materials having respective different refractive indexes;

and a band pass filter constituted a thin multilayer precision coating film made of resin materials having respective different refractive indexes.

Description will be given of a polarization element (A) below. Description will be given of a mechanism of simultaneous revelation of light condensation and improvement on brightness in a case where a polarization element (A) is employed. The present invention will be described with an ideal model as follows:

Fig. 1 is a descriptive representation showing a principle in a case where a circular polarization type reflecting polarizer (a1) is used as a reflecting polarizer (a). In Fig. 1, as a polarization element (A), a circular polarization type reflection polarizer (a1), a retardation layer (b1) and a circular polarization type reflection polarizer (a1) are disposed in the order starting at the backlight side (the lower side).

A working principle is as described in the steps 1) to 3):

1) With the circular polarization type reflection polarizer (a1) separating a polarized light by reflection, incident light is divided into transmitted light and reflected light by a rotational sense of polarization of incident light. Therefore, no absorption loss occurs.
2) With a special retardation plate (b1) having a front retardation of almost zero and a retardation in an oblique direction of a value, front incident light passes as is.
3) Incident light in an oblique direction is not absorbed and returned back as reflected light. The reflected light is repeatedly reflected till the light is converted to a transmitted light.

The retardation plate (b1) is generally referred to as a negative C plate (negative retardation plate) or a positive C plate (positive retardation plate). The retardation plates (b1) have properties that in the vertical direction (the normal direction), a retardation is close to zero, while when being inclined, a retardation occurs. As typical negative C plates, exemplified are to be concrete: a biaxially stretched polycarbonate film and polyethylene terephthalate film, a film made of a cholesteric liquid crystal, and having a selective reflection wavelength band set to be shorter than visible light, a film made of a discotic liquid crystal aligned in parallel to a plane and a film made of an inorganic crystalline compound, having a negative retardation, and obtained by in-plane alignment. As a typical positive C plate, exemplified is, to be concrete: a liquid crystal film obtained in homeotropic alignment.

A circular polarization type reflection polarizer (a1) in use is a polarizer in which a cholesteric liquid crystal is mainly aligned and a twist pitch is adjusted and fixed (for example, a laminate of plural films having respective different selective reflection central wavelengths or a film in a single layer and having a pitch altering in the thickness direction) so that a selective reflection wavelength band covers a visible light region/a light source emission wavelength band; or the like. The circular polarization type reflection polarizers (a1) disposed on both sides of the retardation plate (b1) of Fig. 1 in use are preferably polarizers with the same rotational sense of transmitted circularly polarized light as each other.

Since a circular polarization type reflection polarizer (a1) and the retardation plate (b1) can be used without designating an adherence direction because of almost non-existence of axes in an in-plane direction for both. Hence, an angular range of confinement of collimation has isotropic/symmetrical characteristics.

Note that description below is given based on the figures; marks (r) are assigned as shown in Fig. 2 such that (i) indicate natural light, (ii) circularly polarized light and (iii) linearly polarized light. The circularly polarized light (ii) is divided into (ii)-1 and (ii)-2, which have respective arrow marks reverse in sense of rotation from each other. This means that senses of rotation of both circularly polarized light are reverse to each other. The (iii)-1 and (iii)-2 mean that polarization axes of both are perpendicular to each other.

Description will be given of a case where the circular polarization type reflection polarizers (a1) shown in Fig. 1 are used as a reflecting polarizer (a), following changes in lights in collimation.

1) Light vertically impinging on the circular polarization type reflection polarizer (a1) included in natural light supplied from a backlight is polarization separated into transmitted light (r3) and reflected light (r2). The transmitted light and the reflected light are reverse in rotational sense of circular polarization to each other.
2) The transmitted light (r3) passes through the retardation layer (b1) as is.
3) Transmitted light (r4) further passes through the circular polarization type reflection polarizer (a1) as is.
4) Transmitted light (r5) is used in a liquid crystal display disposed thereon.
5) On the other hand, light obliquely impinging on the circular polarization type reflection polarizer (a1) included in natural light (r6) supplied from the backlight is polarization separated into transmitted light (r8) and a reflected light (r7). The transmitted light and the reflected light are reverse in rotational sense of circular polarization to each other.
6) Transmitted light (r8) is affected in retardation while passing through the retardation layer (b1). When retardation value of 1/2 wavelength is given, circularly polarized light changes a current rotational sense thereof to a reverse rotational sense. Hence, a rotational sense of the transmitted light (r8) is inverted after transmission of the retardation layer (b1).

7) Transmitted light (r9) is emitted with a reverse rotational sense under an influence of retardation.

8) The transmitted light (r9) with a reverse rotational sense is reflected back on the circular polarization type reflection polarizer (a1). It has been generally known that a rotational sense of a circularly polarized light is inverted when being reflected (W. A. Shurcliff, Polarized Light: Production and Use, (Harvard University Press, Cambridge, Mass., 1966). As an exception, it has been known that in a case of reflection on a cholesteric liquid crystal layer, no change in rotational sense occurs. Herein, since reflection is performed on a cholesteric liquid crystal surface, no change occurs in either of rotational senses of circular polarization of the transmitted light (r9) and the reflected light (r10).

9) The reflected light (r10) receives an influence of retardation while passing through the retardation layer (b1).

10) Transmitted light (r11) is inverted in rotational sense thereof under an influence of retardation.

11) The transmitted light (r11) returns back with the same rotational sense as the transmitted light (r8) because of inversion of a rotational sense passes through the circular polarization type reflection polarizer (a1) as is.

12) Reflected light (r2, r7 and r12) returns back to the backlight side and recycled. These returned light is repeatedly reflected till the light changes propagation directions and a rotational sense of polarization at random by a diffusion plate and others disposed in the backlight and thereby converted to light that can again transmit in the vicinity of the normal direction to a polarizer (A), thereby contributing to brightness enhancement.

13) Since the transmitted circularly polarized light (r5) can be converted to linearly polarized light by disposing a λ/4 plate, the light can be used in a liquid crystal display without causing absorption loss.

In connection with a transmittance and reflectance of the circular polarization type reflection polarizer (a1) using a cholesteric liquid crystal, a wavelength characteristic of a transmitted light shifts to the short wavelength side relative to incident light in an oblique direction. Therefore, in order to function sufficiently on incident light at a deep angle, a necessity arises that a sufficient polarization characteristic/retardation characteristic is ensured in the long wavelength side outside the visible light region. While the retardation layer (b1) used in this system, ideally and theoretically, would have only to have a retardation of 1/2 wavelength, to be exact, in an oblique direction, a circular polarization type reflection polarizer (al: a cholesteric liquid crystal layer) actually used has a property as a negative retardation plate to some extent. Hence, the retardation layer (b1) can exert the optical function of the present invention if the layer has a retardation of 1/8 wavelength or more in an oblique direction.

In a case where the reflection polarizer (a) is a linear polarization type reflection polarizer (a2), an optical axis relative to a light incident a C plate in an oblique direction is always perpendicular to a light direction, for example, if the C plate (retardation layer (b1)) is used alone as a retardation layer. Hence, retardation is not produced to thereby cause no polarization conversion. Therefore, in a case where the linear polarization type reflection polarizer (a2) is employed, λ/4 plates (b2) each having the slow axis direction at an angle of 45° or -45° relative to the polarization axis of the linear polarization type reflection polarizer (a2) are disposed on both sides of the C plate. With such a construction applied, an operation can be performed that the linearly polarized light is converted to a circularly polarized light with the λ/4 plate (b2), thereafter, the circularly polarized light is converted to an inverted circularly polarized light by a retardation of the C plate and the circularly polarized light can be again converted to linearly polarized light with the λ/4 plate (b2).

Fig. 3 is a conceptional view showing a process in which natural light is polarization separated to a linearly polarized light with the linear polarization type reflection polarizer (a2) and further converted to circularly polarized light with the λ/4 plate (b2).

Fig. 4 is a conceptional representation in a case where a linear polarization type reflection polarizer (a2) is employed as the reflection polarizer (a). In Fig. 4, as the polarizing element (A), a linear polarization type reflection polarizer (a2), a λ/4 plate (b2), a retardation layer (b1) and a linear polarization type reflection polarizer (a2) are disposed in the order starting at the backlight side (the lower side).

Fig. 5 is an example of laminate angles of respective films in a collimation system shown in Fig. 4. A double head arrow mark shown on a linear polarization type reflection polarizer (a2) is the polarization axis and a double head arrow mark shown on the λ/4 plate (b2) is the slow axis. Two pairs of the polarization axis of a linear polarization type reflection polarizer (a2) and the slow axis of a λ/4 plate (b2) are arranged on both sides of the C plate: the retardation layer (b1) so as to be at an angle of 45° (-45°) ± 5° relative to each other. The combinations are shown as set1 and set 2, respectively. Note that an angle formed between the axes of the λ/4 plates (b2) on the incidence side and the emission side is arbitrary.

If an angle formed between a polarization axis of the linear polarization type reflection polarizer (a2) and a slow axis of the λ/4 plate (b2) is maintained at a value of 45° (-45°) relative to each other, the set1 and the set2 may be rotated. Since the C plate: the retardation layer (b1) has no axis direction in a plane, the C plate can be disposed without designation of an angle.

Description will be given, following changes in collimated lights shown in Figs. 4 and 5.

1) Part of natural light (r14) supplied from a backlight vertically impinges on the linear polarization type reflection polarizer (a2).
2) The linear polarization type reflection polarizer (a2) transmits linearly polarized light (r15) and reflects linearly polarized light (r16) in a direction perpendicular thereto.
3) The linearly polarized light (r15) transmits the λ/4 plate (b2) and is converted to circularly polarized light (r17).
4) The circularly polarized light (r17) passes through the retardation layer (b1) as is.
5) Circularly polarized light (r18) passes through the λ/4 plate (b2) and is converted to linearly polarized light (r19).
6) The linearly polarized light (r19) passes through the linear polarization type reflecting polarizer (a2) as is.
7) Linearly polarized light (r20) impinges on a liquid crystal display disposed thereon and transmitted through without a loss.
8) On the other hand, part of natural light (r21) supplied from the backlight impinges obliquely on the linear polarization type reflection polarizer (a2).
9) The linear polarization type reflection polarizer (a2) transmits a linearly polarized light (r22) and reflects linearly polarized light (r23) in a direction perpendicular thereto.
10) The linearly polarized light (r22) transmits the λ/4 plate (b2) and is converted to circularly polarized light (r24).
11) The circularly polarized light (r24) is affected of a retardation of 1/2 wavelength and a rotational sense thereof is inverted while passing through the retardation layer (b1).
12) Circularly polarized light (r25) with a reverse rotational sense passes through the λ/4 plate (b2) and is converted to linearly polarized light (r26).
13) The linearly polarized light (r26) is reflected back on the linear polarization type reflection polarizer (a2) and converted to linearly polarized light (r27).
14) The linearly polarized light (r27) passes through the λ/4 plate (b2) and is converted to circularly polarized light (r28).
15) The circularly polarized light (r28) is affected of a retardation of 1/2 wavelength and a rotational sense thereof is inverted while passing through the retardation layer (b1).
16) Circularly polarized light (r29) with a reverse rotational sense passes through the λ/4 plate (b2) and is converted to linearly polarized light (r30).
17) The linearly polarized light (r30) passes through the linear polarization type reflection polarizer (a2) as is.
18) Reflected light (r16, r23 and r31) returns back to the backlight side and recycled.

While in an ideal system, an angle between the slow axis of a λ/4 plate (b2) described herein and the polarization axis of a linear polarization type reflection polarizer (a2) theoretically in essence is 45°, characteristics of the linear polarization type reflection polarizer (a2) and the λ/4 plate (b2) in a practical case are not perfect in the visible light region and each have a subtle change according to a wavelength. If this is neglected and lamination is conducted at 45°, there arises a case where coloration occurs.

Therefore, by shifting an angle slightly to compensate a hue, optimization of the system in the entirety can be reasonably realized. On the other hand, if an angle is largely shifted, there arise other problems such as reduction in transmittance and others. Therefore, it is desirable that adjustment is actually performed within a range of the order of ±5°.

In connection with a transmittance and reflectance of the linear polarization type reflection polarizer (a2), that a wavelength characteristic of a transmitting light shifts relative to incident light in an oblique direction to the short wavelength side is the same as in the circular polarization type reflection polarizer (a1) using a cholesteric liquid crystal. Therefore, in order to function sufficiently on incident light at a deep angle, a necessity arises that a sufficient polarization characteristic/retardation characteristic is ensured in the long wavelength side outside the visible light region.

The linear polarization type reflection polarizer (a2) has a smaller negative retardation characteristic of its own as compared with that of a cholesteric liquid crystal. Therefore, a retardation in an oblique direction (an inclination of 30°) of the retardation layer (b1) used by being inserted between the linear polarization type reflection polarizers (a2) is somewhat larger than in the case of the circular polarization type reflection polarizers (a1) using a cholesteric liquid crystal and preferably 1/4 wavelength or more.

In a case where the reflection polarizer (a) is the linear polarization type reflection polarizer (a2), which is different from the above described case, a similar effect can also be obtained by replacing the structure in which the C plate: the retardation layer (b1) is sandwiched between the two λ/4 plates (b2) with two biaxial retardation layers (b3) each of which has a front retardation of about λ/4, and a retardation in the thickness direction of about λ/2 or more. Such a biaxial retardation layer (b3) with an Nz factor of 2 or more satisfies the above described required conditions.

Fig. 6 is a conceptional representation in a case where the linear polarization type reflection polarizers (a2) are adopted as reflection polarizers (a) and the biaxial retardation layers (b3) is employed. In Fig. 6, as a polarization element (A), a linear polarization type reflection polarizer (a2), a biaxial retardation layer (b3), a biaxial retardation layer (b3) and a linear polarization type reflection polarizer (a2) are disposed in the order starting at the backlight side

(the lower side).

Fig. 7 is an example of laminate angles of films in the collimation system shown in Fig. 6. A double head arrow mark shown on a linear polarization type reflection polarizer (a2) is the polarization axis; a double head arrow shown on a retardation layer (b1) is the slow axis. The polarization axis of a linear polarization type reflection polarizer (a2) and the slow axis of a biaxial retardation layer (b3) are arranged at an angle of 45° (-45°) ± 5° therebetween. The combinations are indicated by set 1 and set 2, respectively.

For ease in description of optical paths, there is exemplified a case where the linear polarization type reflection polarizers (a2) disposed one above the other have the respective polarization axes parallel to each other and slow axes of the two biaxial retardation layers (b3) one on the other are perpendicular to each other. The biaxial retardation layers (b3) one on the other has the respective slow axes forming an arbitrary angle therebetween. The set 1 and set 2 may be rotated as far as an angle between the polarization axis of a linear polarization type reflection polarizer (a2) and the slow axis of a biaxial retardation layer (b3) is maintained at a value of 45° (-45°) relative to each other.

Description will be given, following changes in collimated lights shown in Figs. 6 and 7.

1) Part of natural light (r32) supplied from a backlight impinges vertically on the linear polarization type reflection polarizer (a2).
2) The linear polarization type reflection polarizer (a2) transmits linearly polarized light (r33) and reflects linearly polarized light (r34) in a direction perpendicular to the linearly polarized light (r33).
3) The linearly polarized light (r33) transmits the two biaxial retardation layers (b3) each with a front retardation of about 1/4 wavelength. Herein, since the slow axes of the two biaxial retardation layers (b3) one on the other are perpendicular to each other at 90°, the front retardation is 0. Therefore, linearly polarized light (r35) passes through as is.
4) The linearly polarized light (r35) passes through the linear polarization type reflection polarizer (a2) as is.
5) Linearly polarized light (r36) impinges on a liquid crystal display and transmitted without a loss.
6) On the other hand, part of natural light (r37) supplied from the backlight impinges obliquely on the linear polarization type reflection polarizer (a2).
7) The linear polarization type reflection polarizer (a2) transmits linearly polarized light (r38) and reflects linearly polarized light (r39) in a direction perpendicular to thereof.
8) The linearly polarized light (r38) impinges obliquely on the two biaxial retardation layers (b3). Since the two biaxial retardation layers (b3) each have a front retardation of 1/4 wavelength and an Nz factor of 2 or more, linearly polarized light (r40) transmitted through the two biaxial retardation layers (b3) changes the polarization axis direction thereof by 90° because of a change in retardation in the thickness direction.
9) Linearly polarized light (r40) impinges on the linear polarization type reflection polarizer (a2).
10) Since the linear polarization type reflection polarizers (a2) one above the other have the polarization axes in the same direction, the linearly polarized light (r40) is reflected as a reflected light (r41).
11) The reflected light (r41) is affected of a retardation while passing through the two biaxial retardation layers (b3) in a similar way to that in the step 8) to thereby form linearly polarized light (r42) with the polarization axis direction thereof rotated by 90°.
12) The linearly polarized light (r42) passes through the linear polarization type reflection polarizer (a2) as is.
13) Reflected light (r34, r39 and r43) returns back to the backlight side and recycled.

The polarization element (A) shown in Figs. 6 and 7 have the two biaxial retardation layers (b3), having a front retardation of about 1/4 wavelength and an Nz factor of 2 or more, laminated one on the other each. This structure can produces almost the same characteristic as in the case employing a three layered laminate of the structure in which the C plate : the retardation layer (b1) is sandwiched between the two λ/4 plates (b2), which is shown in Figs. 4 and 5. Therefore, the number of laminated layers is smaller and productivity is somewhat more excellent than the above described polarization element (A).

While in an ideal system, an angle between the slow axis of a retardation plate (b3) and the polarization axis of a linear polarization type reflection polarizer (a2) described herein theoretically in essence is 45°, characteristics of the linear polarization type reflection polarizer (a2) and the retardation layer (b3) in a practical case are not perfect in the visible light region and each have a subtle change according to a wavelength. If this is neglected and lamination is conducted at 45°, there arises a case where coloration occurs.

Therefore, by shifting an angle slightly to compensate a hue, optimization of the system in the entirety can be reasonably realized. On the other hand, if an angle is largely shifted, there arises a case where other problems such as reduction in transmittance and others occur. Therefore, it is desirable that adjustment is actually performed within a range of the order of ±5°.

In connection with a transmittance and reflectance of the linear polarization type reflection polarizer (a2), that a wavelength characteristic of transmitted light shifts relative to incident light in an oblique direction to the short wavelength side is the same as the circular polarization type reflection polarizer (a1) using a cholesteric liquid crystal. Therefore, in order to function sufficiently on incident light at a deep angle, a necessity arises that a sufficient polarization characteristic/retardation characteristic is ensured in the long wavelength side outside the visible light region.

In a case where a reflection polarizer (a) is a linear polarization type reflection polarizer (a2), a similar effect can also be obtained by disposing a biaxial retardation layer (b4) having a front retardation of about $\lambda/2$ and a retardation in the thickness direction of $\lambda/2$ or more as a retardation layer (b). Such a biaxial retardation layer (b4) with an Nz factor of 1.5 or more satisfies the above described required conditions.

Fig. 8 is a conceptional representation in a case where a linear polarization type reflection polarizer (a2) is employed as a reflection polarizer (a). In Fig. 8, as the polarization element (A), a linear polarization type reflection polarizer (a2), a biaxial retardation layer (b4) and a linear polarization type reflection polarizer (a2) are disposed in the order starting at the backlight side (the lower side).

Fig. 9 is an example of laminate angles of films in the collimation system shown in Fig. 8. A double head arrow mark shown on a linear polarization type reflection polarizer (a2) is the polarization axis and, a double head arrow shown on a retardation layer (b4) is the slow axis. The polarization axes of the linear polarization type reflection polarizer (a2) one above the other are arranged so as to be perpendicular to each other. The slow axis of a biaxial retardation layer (b4) and the polarization axis of a linear polarization type reflection polarizer (a2) are arranged at an angle of 45° (-45°) ±5° therebetween.

Description will be given, following changes in collimated lights in the above described example shown in Figs. 8 and 9.

1) Part of natural light (r47) supplied from a backlight impinges vertically on the linear polarization type reflection polarizer (a2).
2) The linear polarization type reflection polarizer (a2) transmits linearly polarized light (r48) and reflects linearly polarized light (r49) in a direction perpendicular to the linearly polarized light (r48).
3) The linearly polarized light (r48) transmits the biaxial retardation layer (b4) with a front retardation of about 1/2 wavelength and converted to linearly polarized light (r50) and a direction of the polarization axis thereof is rotated by 90°.
4) The linearly polarized light (r50) passes through the linear polarization type reflection polarizer (a2) as is.
5) Transmitted linearly polarized light (r51) impinges on a liquid crystal display and is transmitted without a loss.
6) On the other hand, part of natural light (r52) supplied from the backlight impinges obliquely on the linear polarization type reflection polarizer (a2).
7) The linear polarization type reflection polarizer (a2) transmits linearly polarized light (r53) and reflects linearly polarized light (r54) in a direction perpendicular to the linearly polarized light (r53).
8) The linearly polarized light (r53) impinges obliquely on the biaxial retardation layer (b4). Since the biaxial retardation layer (b4) has a front retardation of about 1/2 wavelength and an Nz factor of 2 or more due to the effect of the retardation in the thickness direction, the linearly polarized light (r53) transmits the biaxial retardation layer (b4) as a linearly polarized light (r55) in the same state as the linearly polarized light (r53) with respect of a direction of the polarization axis.
9) Transmitted linearly polarized light (r55) is reflected on the linear polarization type reflection polarizer (a2) and converted to reflected light (r56).
10) The reflected light (r56) impinges on the retardation layer (b4). On this occasion, the reflected light (r56) transmits without altering the axis direction.
11) Transmitted linearly polarized light (r57) passes through the linear polarization type reflection polarizer (a2) as is, as linearly polarized light (r58).
12) Reflected light (r49, r54 and r58) returns back to the backlight side and recycled.

The polarization element (A) shown in Figs. 8 and 9 include the single biaxial retardation layer (b4) having a front retardation of about 1/2 wavelength and an Nz factor of 1.5 or more. This structure can produce almost the same characteristic as in the case where the three layered laminate in a structure in which the C plate: the retardation layer (b1) is sandwiched between the two $\lambda/4$ plates (b2), which is shown in Fig. 4 or 5. Therefore, the number of layers in the laminate is less and somewhat more excellent in productivity as compared with those of the above described polarization element (A). Moreover, the polarization element (A) shown in Figs. 8 and 9 is more excellent than the case where a two layer laminate is used as sown in Figs.6 and 7.

While in an ideal system, an angle between the slow axis of the retardation plate (b4) and the polarization axis of a linear polarization type reflection polarizer (a2) described herein theoretically in essence is 45°, characteristics of the linear polarization type reflection polarizer (a2) and the retardation plate (b4) in a practical case are not perfect in the visible light region and each have a subtle change according to a wavelength. If this is neglected and lamination is conducted at 45°, there arises a case where coloration occurs.

Therefore, by shifting an angle slightly to compensate a hue, optimization of the system in the entirety can be reasonably realized. On the other hand, if an angle is largely shifted, there arises a case where other problems such as reduction in transmittance and others occur. Therefore, it is desirable that adjustment is actually performed within a range of the order of ±5°.
In connection with a transmittance and reflectance of the linear polarization type reflection polarizer (a2), that a wavelength characteristic of a transmitted light shifts relative to incident light in an oblique direction to the short wavelength side is the same as the circular polarization type reflection polarizer (a1) using a cholesteric liquid crystal. Therefore, in order to function sufficiently on incident light at a deep angle, a necessity arises that a sufficient polarization characteristic/retardation characteristic is ensured in the long wavelength side outside the visible light region.
A polarization element (A), as shown in Figs. 1 to 9, has a retardation layer (b) converting light impinging at an incidence angle of 30° inclined from the normal direction to polarized light with an axis direction to be reflected by two reflection polarizers (a) and the polarization element (A) functions a total reflection at an incidence angle of 30° not to transmit light at an incidence angle close to 30°. The polarization element (A) has a substantially high transmittance at an incidence angle in the range of the order of from ±15° to ±20° inclined from the normal direction while light at an incidence angle higher than the range is reflected and recycled. Hence, transmitted lights from a light source are concentrated in the above range and condensed and collimated.
Thus obtained beam collimated backlight, as features thereof, is thinner and makes a light source with a high light parallelism to be obtained with more of ease than in a conventional practice. In addition, since collimation is realized by polarizing reflection substantially without absorption loss, reflected non-collimated light component returns to the backlight side and scattering reflected, wherein only a collimated light component of the scattered reflected light is extracted for recycling, which process is repeated, thereby enabling a substantially high transmittance and a substantially high light utilization efficiency to be achieved.
A retardation anisotropy control type collimating means used in this invention is characterized by that no in-plane fine structure is visually recognized when being viewed along a surface direction in optical observation, absolutely no interference is observed between liquid crystal pixels, a black matrix, a film having a fine structure used in a collimating means, a glare-treated surface as the outermost surface of the liquid crystal display and others, which fine structures are no cause for a moiré.
A moiré, shown in FIG. 10 , is a pattern of darkness and brightness having a frequency lower than that of a lattice visually recognized when layers are superimposed with lattices formed in the respective different layers at angles therebetween.
A pitch of a moiré stripe is expressed by the following formula 1:

$$\left(\frac{1}{S3}\right)^2 = \left(\frac{1}{S1}\right)^2 + \left(\frac{1}{S2}\right)^2 - \frac{2\cos\alpha}{S1 \times S2}$$

In the formula 1, S1 indicates a first lattice pitch, S2 a second lattice, S3 a moiré fringe pitch and $\alpha$ an angle formed between the first lattice and the second lattice.
If a visibility (V) of a moiré stripe is calculated with definition of the maximum value of intensities I of a moiré stripe obtained by superimposing different lattices in such a way as Imax, the minimum value thereof as Imin, the visibility is given by a mathematical expression : V = (Imax - Imin)/(Imax + Imin). In order to decrease the contrast, it is desirable that an angle between the lattices is sufficiently large and close to perpendicularity. Three or more layers each having a lattice is hard to satisfy the required condition. Therefore, in order to suppress a moiré phenomenon, it is understood that it is effective to reduce layers each having a lattice structure.

(Reflection Polarizer (a))

It is desirable to achieve a total reflection of light with a wavelength in the vicinity of 550 nm high in visual sensitivity from the viewpoint of brightness enhancement and it is desirable that a selective reflection wavelength of the reflection polarizer (a) is superimposed on light at least in a wavelength region of 550 nm ± 10 nm.
In a backlight using a wedge type light guide plate adopted in more of liquid crystal displays, for example, angles of emitted lights from the light guide plate are about 60° inclined from the normal direction. A blue shift amount at this angle reaches about 100 nm. Therefore, it is understood that in a case where a 3 wavelength cold cathode fluorescent lamp is employed as the backlight, a necessity arises that a selective reflection wavelength reaches to the wavelength side longer than at least 710 nm since a red bright-line spectrum is at 610 nm. Since a selective reflection wavelength bandwidth necessary in the long wavelength side, as described above, depends largely on an incidence angle and a wavelength of incident light from the light source, a long wavelength end thereof is set arbitrarily according to required specifications.

In a case where the backlight light source emits only a specific wavelength, for example, in a case of a colored cold cathode fluorescent lamp, it is only required to enable only an obtained bright line to be shielded.

In a case where emitted lights from the backlight are confined in a range in the front direction in advance in design of a microlens, dots, a prism, and others, it is not necessary to remarkably extend a selective reflection wavelength to the long wavelength side since transmitted light at a large incidence angle can be neglected. A design can be affected properly so as to be adapted for combined members and a kind of light source.

The reflection polarizers (a) may be either a combination of absolutely the same members or a combination of one member reflecting all the wavelengths of visual light thereon and the other reflecting part thereof thereon.

(Circular Polarization Type Reflection Polarizer (a1))

For example, a cholesteric liquid crystal material is used in a circular polarization type reflection polarizer (a1). In a circular polarization type reflection polarizer (a1), a central wavelength in selective reflection is determined by a formula $\lambda = np$ (wherein n indicates a refractive index of a cholesteric material and p indicates a chiral pitch). For obliquely incident light, the superimposed wavelength region is preferably wider since a selective reflection wavelength is subjected to a blue shift.

In a case where a circular polarization type reflection polarizer (a1) is made of a cholesteric materials, a similar polarizer can be obtained even in combination of different types (which are of a right hand twist and a left hand twist) in a way such that according to a similar way of thinking, a retardation is zero or $\lambda$ if a front retardation is inclined at $\lambda/2$, whereas the similar polarizer is unprofitable since a problem arises because of anisotropy or coloring abnormality according to an azimuth of the inclined axis. While from such a viewpoint, it is preferable to combine members of the same type (between only members with a right hand twist or only members with a left hand twist), coloring abnormality can also be suppressed by cancellation with combination of cholesteric liquid crystal molecules one above the other or a C plate different in wavelength distribution characteristic from each other.

A proper cholesteric liquid crystal may be used as a cholesteric liquid crystal constituting a circular polarization type reflection polarizer (a1) without imposing any specific limitation. Examples thereof that are named include: a liquid crystal polymer exhibiting a cholesteric liquid crystallinity at a high temperature; a polymerized liquid crystal obtained by polymerizing a liquid crystal monomer, and a chiral agent and an alignment agent, when both are required, with illumination of ionizing radiation such as an electron beam, ultraviolet or the like, or with heating; and a mixture thereof. While a liquid crystallinity may be either lyotropic or thermotropic, a thermotropic liquid crystal is desirable from the view point of ease of control and formability of monodomain.

Formation of a cholesteric liquid crystal layer can be performed by means of a method in conformity with a conventional alignment treatment. Exemplified are: a method in which a liquid crystal polymer is developed on a proper alignment film selected from the group: an alignment film obtained by being subjected to a rubbing treatment with a rayon cloth or the like on a film made of polyimide, polyvinyl alcohol, polyester, polyarylate, polyamide imide, polyether imide or the like formed on a support base material having as low a birefringence retardation as possible such as triacetyl cellulose, amorphous polyolefin or the like; an alignment film made of an obliquely evaporated layer made of $SiO_2$; an alignment film made of a base material using a surface nature and state of a stretched base material such as polyethylene terephthalate, polyethylene naphthalate or the like; an alignment film made of a base material with fine surface irregularity of projections and depressions having a fine alignment control force formed thereon obtained by treating a surface thereof with a fine grinding agent represented by a rubbing cloth or red iron oxide; an alignment film made of a base material having an alignment film producing a liquid crystal control force by illuminating an azobenzene compound or the like on a base material film described above with light formed thereon; and others, and the liquid crystal polymer is heated at a temperature of a glass transition temperature or higher and lower than an isotropic phase transition temperature and cooled at a temperature lower than the glass transition temperature in a planar alignment state of the liquid crystal polymer molecules into a glassy state to thereby form a fixed layer in which the alignment is fixed; and other methods.

A structure may also be fixed by illuminating with energy such as ultraviolet, an ion beam or the like at a stage where an alignment state is established. A base material with a low birefringence of the above described base materials may also be used as a liquid crystal layer support as is. In a case where a base material with a high birefringence is adopted or where a request for a thickness of a polarization element (A) is severe, a liquid crystal layer can be separated from the alignment base material for proper use.

Film formation of a liquid crystal polymer can be performed by means of a method in which a liquid crystal polymer is developed into a thin film using a solution of the liquid crystal polymer with a solvent with one of the following techniques: such as a spin coating method; a roll coating method, a flow coating method; a printing method; a dip coating method; a flow film forming method; a bar coating method; a gravure printing method and others, to further dry the thin film, when required. Examples of the solvent that can be properly used include: chlorine containing solvents such as methylene chloride, trichloroethylene and tetrachloroethane; ketone solvents such as acetone, methyl ethyl

ketone and cyclohexanone; aromatic solvents such as toluene; cycloalkanes such as cycloheptane; and N-methylpyrrolidone, tetrahydrofuran and others.

One of methods can be adopted in which a heat-melt of a liquid crystal polymer and preferably a heat-melt in a state exhibiting an isotropic phase is developed in a procedure in conformity with a procedure as described above, the developed film is further developed to a thinner film while a melting temperature is maintained, if necessary, and the thinner film is then solidified. The one method is a method using no solvent; therefore, a liquid crystal polymer can be developed by a method good in hygiene in a working environment as well. Note that in development of a liquid crystal polymer, there can be adopted a superimposition scheme for cholesteric liquid crystal layers with alignment films interposed between layers for the purpose to realize a thinner, if necessary.

One of the optical layers can also be separated from a support base material/an alignment base material therefore used in film formation and transferred onto another optical material for use when required.

(Linear Polarization Type Reflection Polarizer (a2))

Examples of the liner polarization type reflection polarizer (a2) include: a grid type polarizer; a multilayer thin film laminate with two or more layers made of two or more kinds of materials having a difference between refractive indexes; evaporated multilayer thin film having different refractive indexes used in a beam splitter or the like; a multi-birefringence layer thin film laminate with two or more layers made of two or more kinds of materials each having birefringence; a stretched resin laminate with two or more layers using two or more kinds of resins each having a birefringence; a polarizer separating linearly polarized light by reflecting/transmitting linearly polarized light in the axis directions perpendicular to each other; and others.

A uniaxially stretched multilayer laminate can be used that is obtained by uniaxially stretching a multilayer laminate obtained by alternately laminating materials generating a retardation by stretching represented by polyethylene naphthalate, polyethylene terephthalate and polycarbonate; and resins each generating a low retardation, such as an acrylic resin represented by polymethacrylate; and a norbornene resin and others represented by ARTON manufactured by JSR Corp.

(Retardation Layer (b))

The retardation layer (b1) inserted between circular polarization type reflection polarizers (a1) or linear polarization type reflection polarizers (b2) has a retardation in the front direction of almost zero and a retardation of λ/8 or more relative to incident light at an angle of 30° inclined from the normal direction. It is desirable to have a front retardation of λ/10 or less since it is the purpose to retain vertically impinging polarized light.

Retardation relative to incident light in an oblique direction is properly determined according to an angle at which total reflection is effected for efficient polarization conversion. In order to perfectly realize total reflection at an angle of the order of 60° inclined from the normal direction, it is only required to determine a retardation so as to be a value of the order of λ/2 when measured at 60°. Since transmitted light through the circular polarization type reflection polarizer (a1) changes a polarization state thereof by a birefringence like a C plate of the circular polarization type reflection polarizer (a1) itself as well, a retardation when measured at the angle of the C plate that is usually inserted may be a value less than λ/2. Since a retardation of the C plate increases monotonously with increase in inclination of incident light, a retardation has only to be λ/8 or more relative to incident light at an angle of 30° as a target value for effectively causing total reflection at inclination at an angle of 30° or more.

In a case of a design capable of an effective shield of light having an incidence angle of 30° from the front in a polarization element (A) of this invention, transmitted light is sufficiently reduced substantially in a region of an incidence angle of about 20°. In a case where light is limited in this region, transmitted is only light in a region showing a good display of a common TN liquid crystal display. There is a fluctuation due to a kind of liquid crystal in a cell, a condition of an alignment state, a pretilt angle and the like in a used TN liquid crystal display, neither gray scale inversion nor sudden degradation in contrast occurs; therefore, this is a standard adopted for magnification of a viewing angle in this invention. Other contrivances may also be applied that a larger retardation value of a retardation layer is used in order to confine only front light and that milder confinement is given with a smaller retardation value in a particular situation where a compensating retardation plate is combined with a TN liquid crystal.

Any of materials can be used in the retardation layer (b1) without a specific limitation as far as it has an optical characteristic as described above. Exemplified are: a layer having a fixed planar alignment state of a cholesteric liquid crystal having a selective reflection wavelength in a region outside a visible light region (ranging from 380 nm to 780 nm); a layer having a fixed homeotropic alignment state of a rod-like liquid crystal; a layer using columnar alignment or nematic alignment of a discotic liquid crystal; a layer in which a negative uniaxial crystal is aligned in a plane; a layer made of a biaxially aligned polymer film; and others.

As for a C plate, for example, a C plate having a fixed planar alignment state of a cholesteric liquid crystal

having a selective reflection wavelength in a region outside the visible light region (ranging from 380 nm to 780 nm) is desirable to have no coloring abnormality in the visible light region with respect to a selective reflection wavelength of a cholesteric liquid crystal. Hence, a necessity arises for a selective reflection light not to be in the visible region. Selective reflection is specially determined by a cholesteric chiral pitch and a refractive index of a liquid crystal. A value of a central wavelength in selective reflection may be in the near infrared region, whereas it is more desirably in an ultraviolet region of 350 nm or less because of an influence of optical rotation exerted or occurrence of a slightly complex phenomenon. Formation of a cholesteric liquid crystal layer is performed in a similar way to that in formation of a cholesteric liquid crystal layer in the reflection polarizer described above.

A C plate having a fixed homeotropic alignment state is made of a liquid crystalline thermoplastic resin showing a nematic liquid crystallinity at a high temperature; a polymerized liquid crystal obtained by polymerizing a liquid crystal monomer and an alignment agent, when required, under illumination with ionizing radiation such as an electron beam, ultraviolet or the like, or with heating; or a mixture thereof. While a liquid crystallinity may be either lyotropic or thermotropic, a thermotropic liquid crystal is desirable from the view point of ease of control and formability of monodomain. A homeotropic orientation is obtained for example in a procedure in which a birefringent material described above is coated on a film made of a vertically aligned film (such as a film of a long chain alkylsilane) and a liquid crystal state is produced and fixed in the film.

As a C plate using a discotic liquid crystal, there is available a plate obtained by producing and fixing a nematic phase or a columnar phase in a discotic liquid crystal material having an optically negative uniaxiality such as a phthalocyanines or a triphenylene compounds each having an in-plane spread molecule as a liquid crystal material. Inorganic layered compounds each with a negative uniaxiality are detailed in a publication of JP-A No. 6-82777 and others.

A C plate using a biaxial alignment of a polymer film can be obtained by one of the following methods, in which a polymer film having positive refractive index anisotropy is biaxially stretched in a good balance; in which a thermoplastic resin is pressed; and in which a C plate is cut off from a parallel aligned crystal.

In a case where a linear polarization type reflection polarizer (a2) is employed, adopted is a retardation layer (b1) having retardation in the front direction of almost zero and a retardation of λ/4 or more relative to incident light incoming at an angle of 30° inclined from the normal direction. Linearly polarized light is converted to circularly polarized light using a structure in which the retardation layer (b1) is sandwiched between λ/4 plates (b2) each having a front retardation of about λ/4 and thereafter, the circularly polarized lights can be collimated by means of a similar way to that in the circular polarizing plate described above. A section of the structure and arrangement of layers thereof in this case are as shown in Figs. 3, 4 and 5. In the case, an angle formed between the slow axis of a λ/4 plate (b2) and the polarization axis of a linear polarization type reflection polarizer (a2) is as described above and an angle between the axes of the λ/4 plates (b2) can be arbitrarily set.

To be concrete, a λ/4 plate is used as the retardation layer (b2). A λ/4 plate in use is a proper retardation plate adapted for a purpose of use. The λ/4 plate can control an optical characteristic such as a retardation in lamination of two or more kinds of retardation plates. Examples of retardation plates include: birefrengent films obtained by stretching films made of proper polymers such as polycarbonate, norbornene resin, polyvinyl alcohol, polystyrene, polymethylmethacrylate, polypropylene, other polyolefins, polyarylate, polyamide and others; alignment films each made of a liquid crystal material such as a liquid crystal polymer; alignment layers each made of a liquid crystal material supported by a film; and others.

A retardation plate functioning as a λ/4 plate in a broad wavelength range such as the visible light region can be obtained by a method in which, for example, a retardation layer functioning as a λ/4 plate for monochromatic light with a wavelength of 550 nm, a retardation layer exhibiting another retardation characteristic, for example a retardation layer functioning as a 1/2 wavelength plate are superimposed one on the other, or the like method. Therefore, a retardation plate inserted between a polarizing plate and a brightness enhancement film may be made with one, or two or more retardation layers.

A similar effect can be attained by disposing two biaxial retardation layers (b3) each having a front retardation of about λ/4 and a retardation in the thickness direction of λ/2 or more. A biaxial retardation layer (b3) with an Nz factor of about 2 or more satisfies the above described required condition. A section of the structure and arrangement of layers thereof in this case are as shown in Figs. 6 and 7. In the case, a relationship between the slow axis of a biaxial retardation layer (b3) and the polarization axis of a linear polarization type reflection polarizer (a2) are as described above and an angle between the axes of biaxial retardation layers (b3) themselves can be set arbitrarily.

Note that a front retardation of about λ/4 means that the retardation is preferably on the order of λ/4 ± 40 nm and more preferably on the order of λ/4 ± 15 nm relative to light with a wavelength of 550 nm.

A similar effect can also be obtained by using one biaxial retardation layer (b4) having a front retardation of about λ/2 and a retardation in the thickness direction of λ/2 or more. A biaxial retardation layer (b4) with an Nz factor of about 1.5 or more satisfies the above described required condition. A section of the structure and arrangement of layers thereof in this case are as shown in Figs. 8 and 9. In the case, a relationship between the axes of the linear polarization type reflection polarizers (a2) one above the other and the axis of the biaxial retardation layer (b4) inserted

in the middle assumes angles as designated and the angles are specially determined.

Note that a front retardation of about λ/2 means that the retardation is preferably on the order of λ/2 ± 40 nm and more preferably on the order of λ/2 ± 15 nm relative to light with a wavelength of 550 nm.

As the biaxial retardation layers (b3) and (b4), employed are, to be concrete, a layer obtained by biaxially stretching a plastic material having birefringence such as polycarbonate, polyethylene terephthalate or the like; and a layer obtained by uniaxially aligning a liquid crystal material in a plane direction and further aligning the liquid crystal material in the thickness direction so as to have hybrid alignment. A layer obtained by subjecting a liquid crystal material to uniaxial homeotropic alignment can be employed, which is formed by means of a method similar to the method used in film formation of the cholesteric liquid crystal. A necessity arises for use of a nematic liquid crystal material instead of a cholesteric liquid crystal material.

(Arrangement of Diffusing Reflection Plate)

A diffusing reflection plate is desirably arranged on the lower side of a light guide plate as a light source (the other side from an arrangement surface of a liquid cell). A main component of light reflected by a collimating film is an obliquely incident light component and the main component of light is specularly reflected and reflected back in the backlight direction. On this occasion, in a case where a reflection plate on the back surface side is high in specular reflection, a reflection angle is retained and cannot be emitted in the front direction only to end up with light loss. Therefore, a reflection angle of reflected-back light is not retained to thereby increase a scattering reflection component in the front direction; therefore the arrangement of a diffusing reflection plate is desirable.

(Arrangement of Diffusion Plate)

It is also desirable to place a proper diffusion plate between a collimating film and the backlight light source. This is because light impinging obliquely and reflected is scattered in the vicinity of a backlight guide plate and part of the reflected light is scattered in the vertical incidence direction to thereby enhance a reutilization of light.

A used diffusion plate can be obtained by means of a method in which a surface irregularity in depressions and projections is utilized, or in which particles with different refractive indexes are embedded in a resin. The diffusion plate either may be inserted between a collimating film and a backlight or may be laminated to a collimating film.

In a case where a liquid crystal cell to which a collimating film is laminated is placed in the near of a backlight, there is a possibility to cause a Newton ring in a clearance between a film surface and the backlight, while by placing a diffusion plate having a surface irregularity in depressions and projections on the light guide plate side surface of the collimating film in this invention, it can be suppressed to generation of Newton ring. Moreover, a layer serving as a surface irregularity in depressions and projections and a light diffusing structure may be formed as a surface itself of a collimating film in this invention.

(Arrangement of View Angle Magnifying film)

Magnification of a viewing angle in a liquid crystal display of this invention can be achieved by obtaining a uniform and good display characteristic all over the viewing angle through diffusion of light of good display characteristic in the vicinity of the front obtained from a liquid crystal displays combined with a collimated backlight.

A viewing angle magnifying layer used here is a diffusion plate having substantially no backscattering. A diffusion plate can be provided with a diffusion pressure-sensitive material. An arrangement place thereof can be used above or below a polarizing plate on the viewer side of the liquid crystal display. In order to prevent reduction in contrast due to an influence such as bleeding of pixels or a slightly remaining backscattering, the diffusion plate is desirably provided in a layer at a position closest possible to a cell such as between a polarizing plate and a liquid crystal cell. In this case, it is desirable to use a film that does not substantially cancel polarization. A fine particle distribution type diffusion plate is preferably used, which is disclosed in, for example, the publications of JP-A No. 2000-347006 and JP-A No. 2000-347007.

In a case where a viewing angle magnifying layer is disposed outside of a polarizing plate on the viewer side of a liquid crystal cell, a viewing angle compensating retardation plate may not be used especially if a TN liquid crystal cell is used since collimated lights are transmitted through a liquid crystal cell and through the polarizing plate. If an STN liquid crystal cell is used in the case, it has only to use a retardation film that is well compensated with respect to a front characteristic. Since, in this case, a viewing angle magnifying layer has a surface exposed to air, a type having a refractive effect due to a surface profile can also be employed.

On the other hand, in a case where a viewing angle magnifying film is inserted between a polarizing plate and a liquid crystal cell, light is diffused light at the stage where light is transmitted through the polarizing plate. If a TN liquid crystal is used, a necessity arises for compensating a viewing angle characteristic of the polarizer itself. In this

case, it is preferable to insert a retardation plate to compensate a viewing angle characteristic of a polarizing plate between the polarizing plate and the viewing angle magnifying layer. If an STN liquid crystal is used, it is preferable to insert a retardation plate to compensate a viewing angle characteristic of the polarizing plate in addition to a front retardation compensation for the STN liquid crystal.

In a case of a viewing angle magnifying film having a regular structure in the interior thereof such as a microlens array or a hologram film, both conventionally having been available, interference has occurred with a fine structure such as a microlens array, a prism array, a louver, a micromirror array or the like that is included in a black matrix of a liquid crystal display or a collimation system of a conventional backlight to thereby cause a moiré pattern with ease. Since in a collimating film in this invention, a regular structure is not visually recognized in a plane thereof and emitted light has no regularity modulation, no necessity arises for consideration of matching with a viewing angle magnifying layer or an arrangement sequence. Therefore, a viewing angle magnifying layer has a lot of options since no specific limitation is imposed thereon, if neither interference nor a moiré pattern occurs with a pixel black matrix of a liquid crystal display.

In this invention, as viewing angle magnifying layers, preferably used are a light scattering plate, having no substantial backscattering and not canceling polarization, which is described in any of the publications of JP-A Nos. 2000-347006 and 2000-347007 and which has a haze in the range of 80% to 90%. Any of layers each of which has a regular structure in the interior thereof such as a hologram sheet, a microprism array, a microlens array or the like can be used, if neither interference nor a moiré pattern occurs with a pixel black matrix of a liquid crystal display.

(Lamination of Layers)

Lamination of each of the layers may be realized only by being laminated on a preceding layer, while it is preferable to laminate the layers with an adhesive agent or a pressure-sensitive adhesive agent from the viewpoint of workability and light utilization efficiency. In that case, it is desirable from the viewpoint of suppressed surface reflection that an adhesive agent or a pressure-sensitive adhesive agent is transparent and does not have absorption in the visible light region, and have refractive indexes closest possible to refractive indexes of the layers. Preferably used from the view point are an acrylic pressure-sensitive adhesive agent and the like. The following methods can be adopted: one method in which each of the layers forms monodomain with the help of an alignment film separately from the others and sequentially laminated by transfer the layers onto a light transparent base material; and the other in which each of the layers is sequentially formed directly on a preceding layer while forming an alignment film or the like for alignment in a proper manner.

It is possible to further add particles for adjusting diffusibility, when required, to thereby impart isotropic scatterbility, and to properly add an ultraviolet absorbent, an antioxidant, and a surfactant for a purpose to impartation of a leveling property in film formation, in each of the layers and (pressure-sensitive) adhesive layers.

(Other Materials)

Note that various other kinds of optical layers are properly employed according a common method to thereby, manufacture a liquid crystal display.

Polarizing plates are disposed on both sides of a liquid crystal cell. The polarizing plates disposed on both sides of the liquid crystal cell are arranged so that the polarization axes thereof are almost perpendicular to each other. The polarizing plate on the incidence side is arranged so that the polarization axis direction thereof is aligned with the axis direction of a linearly polarized light obtained by transmission from the light source.

Commonly used is a polarizing plate having a protective film on one side or both sides of a polarizer.

A polarizer is not limited especially but various kinds of polarizer may be used. As a polarizer, for example, a film that is uniaxially stretched after having dichromatic substances, such as iodine and dichromatic dye, absorbed to hydrophilic high molecular weight polymer films, such as polyvinyl alcohol type film, partially formalized polyvinyl alcohol type film, and ethylene-vinyl acetate copolymer type partially saponified film; poly-ene type orientation films, such as dehydrated polyvinyl alcohol and dehydrochlorinated polyvinyl chloride, etc. may be mentioned. In these, a polyvinyl alcohol type film on which dichromatic materials such as iodine is absorbed and oriented after stretched is suitably used. Although thickness of polarizer is not especially limited, the thickness of about 5 to 80 μm is commonly adopted.

A polarizer that is uniaxially stretched after a polyvinyl alcohol type film dyed with iodine is obtained by stretching a polyvinyl alcohol film by 3 to 7 times the original length, after dipped and dyed in aqueous solution of iodine. If needed the film may also be dipped in aqueous solutions, such as boric acid and potassium iodide, which may include zinc sulfate, zinc chloride. Furthermore, before dyeing, the polyvinyl alcohol type film may be dipped in water and rinsed if needed. By rinsing polyvinyl alcohol type film with water, effect of preventing un-uniformity, such as unevenness of dyeing, is expected by making polyvinyl alcohol type film swelled in addition that also soils and blocking inhibitors on

the polyvinyl alcohol type film surface may be washed off. Stretching may be applied after dyed with iodine or may be applied concurrently, or conversely dyeing with iodine may be applied alter stretching. Stretching is applicable in aqueous solutions, such as boric acid and potassium iodide, and in water bath.

As the transparent protective film prepared on one side or both sides of the polarizer, materials is excellent in transparency, mechanical strength, heat stability, water shielding property, isotropy, etc. may be preferably used. As materials of the above-mentioned transparent protective film, for example, polyester type polymers, such as polyethylene terephthalate and polyethylenenaphthalate; cellulose type polymers, such as diacetyl cellulose and triacetyl cellulose; acrylics type polymer, such as poly methylmethacrylate; styrene type polymers, such as polystyrene and acrylonitrile-styrene copolymer (AS resin); polycarbonate type polymer may be mentioned. Besides, as examples of the polymer forming a protective film, polyolefin type polymers, such as polyethylene, polypropylene, polyolefin that has cyclo- type or norbornene structure, ethylene-propylene copolymer; vinyl chloride type polymer; amide type polymers, such as nylon and aromatic polyamide; imide type polymers; sulfone type polymers; polyether sulfone type polymers; polyether-ether ketone type polymers; poly phenylene sulfide type polymers; vinyl alcohol type polymer; vinylidene chloride type polymers; vinyl butyral type polymers; allylate type polymers; polyoxymethylene type polymers; epoxy type polymers; or blend polymers of the above-mentioned polymers may be mentioned as a. Films made of heat curing type or ultraviolet ray curing type resins, such as acryl based, urethane based, acryl urethane based, epoxy based, and silicone based, etc. may be mentioned as materials of the above-mentioned transparent protective film.

Moreover, as is described in Japanese Patent Laid-Open Publication No. 2001-343529 (WO 01/37007), polymer films, for example, resin compositions including (A) thermoplastic resins having substituted and/or non-substituted imido group is in side chain, and (B) thermoplastic resins having substituted and/or non-substituted phenyl and nitrile group in side chain may be mentioned. As an illustrative example, a film may be mentioned that is made of a resin composition including alternating copolymer comprising iso-butylene and N-methyl maleimide, and acrylonitrile-styrene copolymer. A film comprising mixture extruded article of resin compositions etc. may be used.

In general, a thickness of the protection film, which can be determined arbitrarily, is 500 μm or less, preferably 1 through 300 μm, and especially preferably 5 through 200 μm in viewpoint of strength, work handling and thin layer

Moreover, it is preferable that the protective film may have as little coloring as possible. Accordingly, a protective film having a retardation value in a film thickness direction represented by Rth= [(nx+ny) /2 - nz] x d of-90 nm through +75 nm (where, nx and ny represent principal indices of refraction in a film plane, nz represents refractive index in a film thickness direction, and d represents a film thickness) may be preferably used. Thus, coloring (optical coloring) of polarizing plate resulting from a protective film may mostly be cancelled using a protective film having a retardation value (Rth) of -90 nm through +75 nm in a thickness direction. The retardation value (Rth) in a thickness direction is preferably -80 nm through +60 nm, and especially preferably -70 nm through +45 nm.

As a protective film, if polarization property and durability are taken into consideration, cellulose based polymer, such as triacetyl cellulose, is preferable, and especially triacetyl cellulose film is suitable. In addition, when the protective films are provided on both sides of the polarizer, the protective films comprising same polymer material may be used on both of a front side and a back side, and the protective films comprising different polymer materials etc. may be used. Adhesives are used for adhesion processing of the above described polarizer and the protective film. As adhesives, isocyanate derived adhesives, polyvinyl alcohol derived adhesives, gelatin derived adhesives, vinyl polymers derived latex type, aqueous polyurethane based adhesives, aqueous polyesters derived adhesives, etc. may be mentioned.

A hard coat layer may be prepared, or antireflection processing, processing aiming at sticking prevention, diffusion or anti glare may be performed onto the face on which the polarizing film of the above described transparent protective film has not been adhered.

A hard coat processing is applied for the purpose of protecting the surface of the polarizing plate from damage, and this hard coat film may be formed by a method in which, for example, a curable coated film with excellent hardness, slide property etc. is added on the surface of the transparent protective film using suitable ultraviolet curable type resins, such as acrylic type and silicone type resins. Antireflection processing is applied for the purpose of antireflection of outdoor daylight on the surface of a polarizing plate and it may be prepared by forming an antireflection film according to the conventional method etc. Besides, a sticking prevention processing is applied for the purpose of adherence prevention with adjoining layer.

In addition, an anti glare processing is applied in order to prevent a disadvantage that outdoor daylight reflects on the surface of a polarizing plate to disturb visual recognition of transmitting light through the polarizing plate, and the processing may be applied, for example, by giving a fine concavo-convex structure to a surface of the protective film using, for example, a suitable method, such as rough surfacing treatment method by sandblasting or embossing and a method of combining transparent fine particle. As a fine particle combined in order to form a fine concavo-convex structure on the above-mentioned surface, transparent fine particles whose average particle size is 0.5 to 50 μm, for example, such as inorganic type fine particles that may have conductivity comprising silica, alumina, titania, zirconia, tin oxides, indium oxides, cadmium oxides, antimony oxides, etc., and organic type fine particles comprising cross-linked of non-cross-linked polymers may be used. When forming fine concavo-convex structure on the surface, the amount of fine particle used is usually about 2 to 50 weight parts to the transparent resin 100 weight parts that forms the fine concavo-convex structure on the surface, and preferably 5 to 25 weight parts. An anti glare layer may serve as a diffusion layer (viewing angle expanding function etc.) for diffusing transmitting light through the polarizing plate and expanding a viewing angle etc.

In addition, the above-mentioned antireflection layer, sticking prevention layer, diffusion layer, anti glare layer, etc. may be built in the protective film itself, and also they may be prepared as an optical layer different from the transparent protective film.

A retardation plate is laminated on a polarizing plate as a viewing angle compensating film and used as a wide viewing angle polarizing plate. A viewing angle compensating film is a film for magnifying a viewing angle so as to enable an image to be viewed with relatively sharpness even in a case where a screen image of a liquid crystal display is viewed not in a direction normal to the screen but in a slightly oblique direction relative to the screen.

As such viewing angle compensating retardation plates, there are available, in addition thereto, a film having a birefringence obtained by a biaxially stretching treatment, a stretching treatment in two directions perpendicular to each other or the like and a biaxially stretched film such as an inclined alignment film. As inclined alignment film, for example, a film obtained using a method in which a heat shrinking film is adhered to a polymer film, and then the combined film is heated and stretched or shrinked under a condition of being influenced by a shrinking force, or a film that is oriented in oblique direction may be mentioned. The viewing angle compensation film is suitably combined for the purpose of prevention of coloring caused by change of visible angle based on retardation by liquid crystal cell etc. and of expansion of viewing angle with good visibility.

Besides, a compensation plate in which an optical anisotropy layer consisting of an alignment layer of liquid crystal polymer, especially consisting of an inclined alignment layer of discotic liquid crystal polymer is supported with triacetyl cellulose film may preferably be used from a viewpoint of attaining a wide viewing angle with good visibility.

No specific limitation is, in addition to the above described condition, imposed on optical layers laminated when being actually used and there can be used one, or two or more optical layers that have an opportunity to be used in formation of a liquid crystal display and others, such as a reflection plate and a transflective plate. Examples thereof especially include: a reflection type polarizing plate and a transflective type polarizing plate obtained by laminating a reflection plate and a transflective plate, respectively, on an elliptic polarizing plate or a circular polarizing plate.

A reflective layer is prepared on a polarizing plate to give a reflection type polarizing plate, and this type of plate is used for a liquid crystal display in which an incident light from a view side (display side) is reflected to give a display. This type of plate does not require built-in light sources, such as a backlight, but has an advantage that a liquid crystal display may easily be made thinner. A reflection type polarizing plate may be formed using suitable methods, such as a method in which a reflective layer of metal etc. is, if required, attached to one side of a polarizing plate through a transparent protective layer etc.

As an example of a reflection type polarizing plate, a plate may be mentioned on which, if required, a reflective layer is formed using a method of attaching a foil and vapor deposition film of reflective metals, such as aluminum, to one side of a matte treated protective film. Moreover, a different type of plate with a fine concavo-convex structure on the surface obtained by mixing fine particle into the above-mentioned protective film, on which a reflective layer of concavo-convex structure is prepared, may be mentioned. The reflective layer that has the above-mentioned fine concavo-convex structure diffuses incident light by random reflection to prevent directivity and glaring appearance, and has an advantage of controlling unevenness of light and darkness etc. Moreover, the protective film containing the fine particle has an advantage that unevenness of light and darkness may be controlled more effectively, as a result that an incident light and its reflected light that is transmitted through the film are diffused. A reflective layer with fine concavo-convex structure on the surface effected by a surface fine concavo-convex structure of a protective film may be formed by a method of attaching a metal to the surface of a transparent protective layer directly using, for example, suitable methods of a vacuum evaporation method, such as a vacuum deposition method, an ion plating method, and a sputtering method, and a plating method etc.

Instead of a method in which a reflection plate is directly given to the protective film of the above-mentioned polarizing plate, a reflection plate may also be used as a reflective sheet constituted by preparing a reflective layer on the suitable film for the transparent film. In addition, since a reflective layer is usually made of metal, it is desirable that the reflective side is covered with a protective film or a polarizing plate etc. when used, from a viewpoint of preventing deterioration in reflectance by oxidation, of maintaining an initial reflectance for a long period of time and of avoiding preparation of a protective layer separately etc.

In addition, a transflective type polarizing plate may be obtained by preparing the above-mentioned reflective layer as a transflective type reflective layer, such as a half-mirror etc. that reflects and transmits light. A transflective type polarizing plate is usually prepared in the backside of a liquid crystal cell and it may form a liquid crystal display of a type in which a picture is displayed by an incident light reflected from a view side (display side) when used in a comparatively well-lighted atmosphere. And this unit displays a picture, in a comparatively dark atmosphere, using

embedded type light sources, such as a back light built in backside of a transflective type polarizing plate. That is, the transflective type polarizing plate is useful to obtain of a liquid crystal display of the type that saves energy of light sources, such as a back light, in a well-lighted atmosphere, and can be used with a built-in light source if needed in a comparatively dark atmosphere etc.

Moreover, the polarizing plate may consist of multi-layered film of laminated layers of a polarizing plate and two of more of optical layers as the above-mentioned separated type polarizing plate. Therefore, a polarizing plate may be a reflection type elliptically polarizing plate or a transflective type elliptically polarizing plate, etc. in which the above-mentioned reflection type polarizing plate or a transflective type polarizing plate is combined with above described retardation plate respectively.

While a polarizing plate and a retardation plate described above can be formed by sequentially laminating layers one at a time in a manufacturing process for a liquid crystal display, an optical film such as an elliptic polarizing plate or the like obtained by lamination in advance has an advantage of being excellent in quality stability, workability in lamination and others and enabling a production efficiency of a liquid crystal display to be improved.

A pressure-sensitive adhesive layer or an adhesive layer can also be provided in an optical element of this invention. A pressure-sensitive layer can be used for adherence to a liquid crystal cell and in addition, is used in lamination of optical layers. In adherence of the optical film, the optical axis thereof can be set at a proper arrangement angle in adaptation for a retardation characteristic as a target.

In the polarizing plate mentioned above and the optical film in which at least one layer of the polarizing plate is laminated, an adhesive layer may also be prepared for adhesion with other members, such as a liquid crystal cell etc.

As the pressure sensitive adhesive agent or the adhesive agent is not especially limited. For example, polymers such as acrylic type polymers; silicone type polymers; polyesters, polyurethanes, polyamides, polyvinyl ethers, vinyl acetate/vinyl chloride copolymers, modified polyolefines, epoxy type; and rubber type such as fluorine type, natural rubber, synthetic rubber may be suitably selected as a base polymer. Especially, the one which is excellent in optical transparency, showing adhesion characteristics with moderate wettability, cohesiveness and adhesive property and has outstanding weather resistance, heat resistance, etc. may be preferably used.

The pressure sensitive adhesive agent or the adhesive agent adhesive may contain cross-linking agent according to a base polymer. And the adhesive agent adhesive may contain additives, for example, such as natural or synthetic resins, adhesive resins, glass fibers, glass beads, metal powder, fillers comprising other inorganic powder etc., pigments, colorants and antioxidants. Moreover, it may be an adhesive layer that contains fine particle and shows optical diffusion nature.

An adhesive agent and a pressure-sensitive adhesive agent each are usually used as an adhesive agent solution of a base polymer or a composition thereof dissolved or dispersed in a solvent at a solid matter concentration of the order in the range of from 10 to 50 wt%. An organic solvent can be properly selected from the group consisting of toluene, ethyl acetate and others; water; or others, so as to be adapted for a kind of an adhesive agent for use.

An adhesive layer and pressure-sensitive adhesive layer may also be prepared on one side or both sides of a polarizing plate or an optical film as a layer in which pressure sensitive adhesives with different composition or different kind etc. are laminated together. Moreover, when adhesive layers are prepared on both sides, adhesive layers that have different compositions, different kinds or thickness, etc. may also be used on front side and backside of a polarizing plate or an optical film. Thickness of an adhesive layer may be suitably determined depending on a purpose of usage or adhesive strength, etc., and generally is 1 to 500 μm, preferably 5 to 200 μm, and more preferably 10 to 100 μm.

A temporary separator is attached to an exposed side of an adhesive layer to prevent contamination etc., until it is practically used. Thereby, it can be prevented that foreign matter contacts adhesive layer in usual handling. As a separator, without taking the above-mentioned thickness conditions into consideration, for example, suitable conventional sheet materials that is coated, if necessary, with release agents, such as silicone type, long chain alkyl type, fluorine type release agents, and molybdenum sulfide may be used. As a suitable sheet material, plastics films, rubber sheets, papers, cloths, no woven fabrics, nets, foamed sheets and metallic foils or laminated sheets thereof may be used.

In addition, in the present invention, ultraviolet absorbing property may be given to the above-mentioned each layer, such as a polarizer for a polarizing plate, a transparent protective film and an optical film etc. and an adhesive layer, using a method of adding UV absorbents, such as salicylic acid ester type compounds, benzophenol type compounds, benzotriazol type compounds, cyano acrylate type compounds, and nickel complex salt type compounds.

## Examples

Description will be given of the present invention showing examples, while this invention is not restricted to the examples shown below.

Note that as to a front retardation, a direction in which an in-plane refractive index is maximized is referred

to as X axis, a direction perpendicular to the X axis as Y axis and the thickness direction of a film as Z axis, and refractive indexes in the axis directions as nx, ny and nz, respectively; and from the refractive indexes nx, ny and nz at 550 nm measured with an automatic birefringence measuring instrument (manufactured by Oji Sceientific Instruments with a trade name of automatic birefringence meter KOBRA21ADH) and a thickness d (nm) of a retardation layer, a front retardation: $(nx - ny) \times d$, and a retardation in the thickness direction: $(nx - nz) \times d$ were calculated. Retardation when measured in an inclined state can be measured with the automatic birefringence measuring instrument. Inclination retardation is expressed by a value of $(nx - ny) \times d$ when being inclined.

Nz factor is defined with a formula: $Nz = (nx - nz)/(nx - ny)$.

Note that a reflectance spectrum was measured with a spectrophotometer (Instant multiphotometry system MCPD-2000, manufactured by Otsuka Electronics Co., Ltd.) and a reflection wavelength band is defined as a wavelength band having a half value of the maximum reflectance.

Example 1

(Preparation of Second Light Condensing Element (Y))

Used as a second light condensing element (Y) was an evaporation-deposited multilayer film band pass filter with 15 $TiO_2/SiO_2$ layers. A polyethylene terephthalate film with a thickness of 50 μm was used as a base material and a total thickness was about 53 μm. A design table including thickness of layers of the evaporation-deposited thin film is shown in Table 1 described blow.

Table 1

| Layers | material | Layer thickness (nm) |
|---|---|---|
| 15 | $TiO_2$ | 92.1 |
| 14 | $SiO_2$ | 130.1 |
| 13 | $TiO_2$ | 68.3 |
| 12 | $SiO_2$ | 97.2 |
| 11 | $TiO_2$ | 63.2 |
| 10 | $SiO_2$ | 88.2 |
| 9 | $TiO_2$ | 152.1 |
| 8 | $SiO_2$ | 92.8 |
| 7 | $TiO_2$ | 70.7 |
| 6 | $SiO_2$ | 50.3 |
| 5 | $TiO_2$ | 148.6 |
| 4 | $SiO_2$ | 95.8 |
| 3 | $TiO_2$ | 65.5 |
| 2 | $SiO_2$ | 96.9 |
| 1 | $TiO_2$ | 65.3 |

(Light Source)

Used as a bright line light source (L) was a 10.4 inch type backlight (manufactured by Stanley Electric Co., Ltd.) using a side light type light guide (the light guide was of a wedged type in section and dot printing was applied on the back surface thereof). A three wavelength type cold cathode fluorescent lamp was used as a light source.

(Wavelength Characteristic)

Wavelength characteristics of the cold cathode fluorescent lamp used as a light source and the evaporation-deposited multilayer film band pass filter, which is a second light condensing element (Y), are as shown in Fig. 22. Measurement of a wavelength characteristic was conducted with a spectrophotometer U4100 manufactured by Hitachi Ltd.

(Light Condensation Characteristic of Second Light Condensing Element (Y))

A graph shown in Fig. 23 is a measurement result on the evaporation-deposited multilayer film band pass filter, which is a second light condensing element (Y), in a structure of Fig. 15 when the filter was used alone.

In the graph shown in Fig. 23, there is observed a secondary peak in the vicinity of 70°, which is because the evaporation-deposited multilayer film band pass filter (Y) is blue-shifted due to oblique incidence and a green light transmission region shows a blue light transmission, while a red light transmission region shows green light transmission. Therefore, strong coloring was observed in emitted light in an oblique direction. An emitted light distribution of the backlight system used was conspicuously colored in blue since a strong light flux was emitted at an angle outside a range of ± 60° relative to the front.

(Backlight System Having First Light Condensing Section (X))

A prism sheet was used as a first light condensing section (X). Used as two prism sheets were two BEF films manufactured by 3M Corp. (made of a polyethylene terephthalate film with a thickness of about 180 µm, an apex angle of about 90° and a prism pitch of 50 µm).

The two prism sheets were laminated on a light guide of the bright line light source (L) so that prism edge lines of the prism sheets were perpendicular to each other. A backlight system (BLS) with the prism sheets as such a first light condensing section (X) had a characteristic condensing light within ±50° relative to the front direction.

(Light condensing system)

The backlight system (BLS) having the first light condensing section (X) and the second light condensing element (Y) were disposed in a structure shown in Fig. 16. Fig. 24 is a measurement result of light condensation characteristic in the structure of Fig. 16. Used as a liquid crystal cell (LC) was a 10.4 inch TFT cell manufactured by Sharp Corp. Used as polarization plates (PL) were SEG1465DU manufactured by NITTO DENKO CORP. which were adhered to both sides of the liquid crystal cell (LC) so as to be perpendicular to each other. The second light condensing element (Y) was adhered to a polarization plate (PL). Note that the same liquid crystal cell (LC) and the same polarization plates (PL) as in this example were used in the following examples.

As can be seen from Fig. 24, it is recognized that a transmission component at a large angle through a collimation film dramatically decreases due to first light condensation to thereby enable uncomfortable coloring to be eliminated. Since owing to an effect of the first light condensing section (X), emitted light from a backlight is narrowed down to an angular range of the order of ±50°, it is understood that secondary transmission in the vicinity of 70° is cut off and does not be produced.

Example 2

(Preparation of Second Light Condensing Element (Y))

Used as the second light condensing element (Y) was a cholesteric liquid crystal band pass filter prepared by thin film coating of a cholesteric liquid crystal polymer. This is a combination of a right circularly polarized light reflecting band pass filter adapted for three wavelengths and a left circularly polarized light reflecting band pass filter adapted for three-wavelengths, and only the lights having three wavelength that are objects, are transmitted through in directions in the vicinity of the vertical direction and an incident light incoming in an oblique direction is reflected.

In the cholesteric liquid crystal band pass filter, the front transmission light is unpolarized light. This is because the liquid crystal layer is used as a band pass filter and transmission light from a region, where polarization separation caused by cholesteric reflection is not affected, transmits in the front direction. Therefore, in measurement of light condensation characteristic, the second light condensing element (Y) and a polarization plate (PL) were directly laminated on each other without providing a retardation layer therebetween.

To be detailed, prepared was a selective reflection circularly polarized light band pass filter reflecting a right circularly polarized light having selective reflection wavelength regions of a range from 440 nm to 490 nm, a range of from 550 to 600 nm and a range of from 615 to 700 nm for an emission spectrum of 435 nm, 545 nm and 610 nm in wavelength of the three wavelength cold cathode fluorescent lamp. Liquid crystal materials were used to prepare three kinds of cholesteric liquid crystal polymers having respective selective reflection central wavelengths of 480 nm, 570 nm and 655 nm based on the specification of EP No. 0834754 A.

A cholesteric liquid crystal polymer was prepared by polymerizing a polymerizable nematic liquid crystal monomer A expressed by the following chemical formula 1:

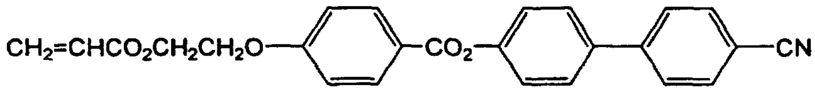

and a polymerizable chiral agent B expressed by the following chemical formula 2:

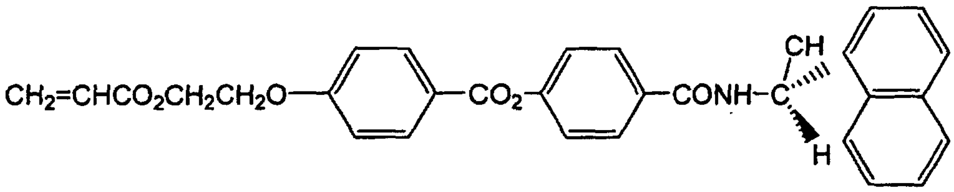

in a liquid crystal mixture with each of proportions (in weight ratios) shown in the following Table 2. Each of the liquid crystal mixtures was dissolved in a tetrahydrofuran to obtain a 33 wt% solution, thereafter nitrogen purge was conducted in an environment at 60°C and then a reaction initiator (azobisisobutylonitrile at 0.5 wt% relative to the mixture) was added to the mixture to thereby cause polymerization. An obtained polymerized material was reprecipitation-separated with diethyl ether for purification. Selective reflection wavelength bands are shown in Table 2.

Table 2

| Selective reflection central wavelength (nm) | (mixing ratio) monomer A / chiral agent B | Selective reflection wavelength band (nm) |
|---|---|---|
| 480 nm | 9.81/1 | 440 to 490 nm |
| 570 nm | 12.5/1 | 550 to 600 nm |
| 665 nm | 14.8/ 1 | 615 to 700 nm |

Each of the cholesteric liquid crystal polymers was dissolved in methylene chloride to prepare a 10 wt% solution. The solution was coated on an alignment base material with a wire bar to a thickness of about 1 μm when measured in a dry state. Used as the alignment base material was a polyethylene terephthalate film with a thickness of 75 μm and a polyvinyl alcohol layer was coated on a surface thereof to a thickness of about 0.1 μm, followed by a rubbing treatment with a rayon rubbing cloth. After the coating, the wet coat was dried at 140°C for 15 min. After the heat treatment ended, the liquid crystal was cooled to room temperature and fixed at the temperature to obtain a thin film.

Liquid crystal thin films in colors were prepared using the respective cholesteric liquid crystal polymers subjecting to a process similar to that as described above and thereafter, adhered to one another with an isocyanate adhesive agent. Thereafter, the polyethylene terephthalate base material was removed and the three liquid crystal layers were laminated sequentially starting at the short wavelength side to obtain a liquid crystal composite layer with a thickness of about 5 μm.

On the other hand, the three liquid crystal layers are laminated in a completely similar way to that as described above with the exception that used as a polymerizable chiral agent B was an enantiomer of that of the chemical formula 2 to form a selective reflection circularly polarized light band pass filter reflecting a left circularly polarized light.

Both of liquid crystal surfaces thereof were adhered to each other with a light transparent acrylic pressure-sensitive adhesive agent (NITTO DENKO CORP. with No. 7 to a thickness of 25 μm) and thereafter the polyethylene terephthalate film as a support base material was separated off to obtain a cholesteric liquid crystal band pass filter (with about 35 μm in thickness).

(Wavelength Characteristic)

A wavelength characteristic of a cholesteric liquid crystal band pass filter, which is a second light condensing element (Y), is as shown in Fig. 25. Note that a graph shown in Fig. 21 is a measurement result on a light condensation characteristic in the structure of Fig. 15 with a cholesteric liquid crystal band pass filter alone, which is the second light condensing element (Y). (Backlight System Having First Light Condensing Section (X))

Used as the first light condensing section (X), similar to that in Example 1, was a backlight system (BLS) having two prism sheet laminated one on the other.

(Light condensing system)

A backlight system (BLS) having the first light condensing section (X) and a second light condensing element (Y) were arranged in the structure of Fig. 16. Fig. 26 is a measurement result on a light condensation characteristic in the structure of Fig. 16.

It is recognized from Fig. 26 that a transmission component at a large angle through a collimation film drastically decreases with the help of first light condensation to thereby enable uncomfortable coloring to be eliminated. It is understood that with an effect of the first light condensing section (X), emitted light from the backlight is confined to an angular range of the order of ±50°; therefore, secondary transmission in the vicinity of 70° is cut off and not produced.

Example 3

(Preparation of Second Light Condensing Element (Y))

Used was as a second light condensing element (Y) was a polarization element obtained by providing a retardation plate (b1) between two circular polarization type reflection polarizer (a1) having respective polarized light selective reflection wavelength bands superimposed on each other.

Used as the circular polarization type reflection polarizers (a1) were cholesteric liquid crystal layers of NIPOCS film (PCF400) manufactured by NITTO DENKO CORP.

Then, the retardation plate (bl, a negative C plate) generating a front retardation of almost O and a retardation in an oblique direction was prepared with a polymerizable liquid crystal according the following method. LC242 manufactured by BASF Corp. was used as a polymerizable mesogen compound and LC756 manufactured by BASF Corp. was used as a polymerizable chiral agent. The polymerizable mesogen compound and the polymerizable chiral compound were used at a mixing ratio of the polymerizable mesogen compound/the polymerizable chiral agent of 11/88 in weight ratio so that a selective reflection central wavelength of an obtained cholesteric liquid crystal is about 350 nm. The selective reflection central wavelength of the obtained cholesteric liquid crystal was 350 m.

A detailed manufacturing method was as follows: the polymerizable chiral agent and the polymerizable mesogen compound were dissolved in cyclopentane (at 30 wt%) and a reaction initiator (IRGACURE 907 manufactured by Chiba Specialty Chemicals Corp. at 1 wt% relative to the mixture) was added to the mixture to prepare a solution. Added to the solution was a surfactant BYK-361 (manufactured by Big Chemi Japan Corp.) at 0.01 wt% relative to the mixture. An alignment substrate in use was obtained by alignment treating a polyethylene terephthalate film: LUMIRROR (a thickness of 75 μm) manufactured by TORAY INDUSTRIES INC. with a rubbing cloth.

The solution was coated to a thickness of 7 μm as measured in a dry state with wire bar, and the wet coat was dried at 90°C for 2 min, thereafter heated temporarily to an isotropic transition temperature 130°C and thereafter gradually cooled. A uniform alignment state was retained and the coat was cured by illumination with ultraviolet (at 10 $mW/cm^2$ for 1 min) in an environment at 80°C to thereby obtain the negative C plate (b1). A retardation of the negative C plate (b1) was measured to obtain 2 nm in the front direction and about 190 nm (> $\lambda/8$) in a direction inclined by 30° for light of 550 nm in wavelength.

The negative C plate (b1) was adhered onto a circular polarization type reflection polarizer (a1) obtained as described with a light transparent acrylic pressure-sensitive adhesive agent (NITTO DENKO CORP. with No. 7 to a thickness of 25 μm) and thereafter, a base material was separated and removed. A circular polarization type reflection polarizer (a1) obtained as described was further laminated thereon and transferred to thereby obtain a polarization element. The polarization element was used as a second light condensing element (Y).

The second light condensing element (Y) in the Example 3 has a polarized light separating function all over the visible light band; front transmitted light is circularly polarized by a polarized light separating function of a cholesteric liquid crystal. Therefore, a 1/4 wavelength plate (B) was inserted between the polarization plate (PL) on the backlight side of the liquid crystal cell (LC) and the second light condensing element (Y) at an inclination of 45° relative to the polarization axis of the polarization plate (PL) and adhered therebetween with a light transparent acrylic pressure-sensitive adhesive agent (NITTO DENKO CORP. with No. 7 to a thickness of 25 μm). Circularly polarized light was converted to a linearly polarized light to thereby enhance a transmission characteristic through the polarized plate.

(Backlight System Having First Light Condensing Section (X))

Prism sheets were used as the first light condensing section (X). The prism sheets in use were two BEF films manufactured by 3M Corp. (made of a polyethylene phthalate film each with a thickness of about 180 μm, a prism apex angle of about 90° and a prism pitch of 50 μm).

The two prism sheets were laminated so that prism edge lines are perpendicular to each other in arrangement on a dot printing acrylic light guide plate (a side light type backlight manufactured by Chatani & Co.,Ltd.). The backlight

system having the prism sheets as the first light condensing section (X) had a characteristic condensing light within ± 55°.

(Light Condensing Characteristic of Second Light Condensing Element (Y))

A graph shown in Fig. 27 was a measurement result on a light condensation characteristic when a polarization element (A), which was the second light condensing element (Y), was used alone in the structure of Fig. 17. Leakage light was recognized outside the angular range of ±50° in a graph shown in Fig. 27.

(Light condensing system)

A backlight system (BLS) having the first light condensing section (X) and a second light condensing element (Y) were arranged in the structure of Fig. 18. Fig. 28 was a measurement result of a light condensation characteristic in the structure of Fig. 18. Note that measurement of light condensation characteristics of Figs. 27 and 28 were conducted with Ez-Contrast manufactured by ELDIM.

It is recognized from Fig. 28 that a transmission component through a collimation film at a large angle dramatically decreases with the help of first light condensation to thereby enable uncomfortable coloring to be eliminated. Emitted light from a light source at an angle outside the range of ±50° decreases by the action of the first light condensation (X) and no light to be transmitted through the second light condensing element (Y) remains outside the range only to cause a second light condensation portion in the middle to be left. That is, only the front is viewed bright while when viewed in an oblique direction, no coloring was observed in an image in pitch darkness.

Example 4

(Preparation of Second Light Condensing Element (Y))

Used as a second light condensing element (Y) was a polarization element in a structure in which a retardation plate (b1) is disposed between two linear polarization type reflection polarizers (a2) having respective polarized light selective reflection wavelength bands superimposed on each other and layers (b2) each with a front retardation of about λ/4 were placed on both sides of the retardation plate (b1).

DBEF manufactured by 3M Corp. were used as linear polarization type reflection polarizers (a2). A retardation plate (b1) was prepared according to a method in conformity with the manufacturing method for a negative C plate in Example 3. The obtained negative C plate (b1) was of 8 μm in thickness and measurement results of retardation were such that a retardation in the front direction was 0 nm and a retardation when inclined by 30° was about 220 nm (> λ/4) for light of 550 nm in wavelength. NRF films manufactured by NITTO DENKO CORP. (with a front retardation of 140 nm) were used as retardation plates (b2) between which the negative C plate was sandwiched and adhered to linear polarization type reflection polarizers (a2) one above the other at respective angles 45° (-45° ) relative to the corresponding linear polarization type reflection polarizers (a2) to thereby obtain a laminate with five layers. Laminating layers were adhered to one another with a light transparent acrylic pressure-sensitive adhesive agent (NITTO DENKO CORP. with No. 7 to a thickness of 25 μm). (Backlight System Having First Light Condensing Section (X))

Used as a backlight system (BLS) having a first light condensing section (X) was a side light type backlight with an acrylic light guide having a section in the shape of a wedge on the top surface of which a microprism array was formed (which was taken out of a note book personal computer manufactured by IBM Corp. with a trade name of Think Pad). The backlight system (BLS) having a first light condensing section (X) condenses emitted light from a light source within ±50° of the front direction as first light condensation.

(Light Condensation Characteristic of Second Light Condensing Element (Y))

A graph shown in Fig. 29 was a measurement result of a light condensation characteristic in the structure of Fig. 19 when a polarization element (A), which is a second light condensing element (Y), was used alone. In the graph of Fig. 29, leakage light was recognized outside the range of ±50° of the front direction. Note that used as a light source (L) in the structure of Fig. 19 was a light box manufactured by Hakuba (a direct under type backlight as a diffuse light source).

(Light condensing system)

A backlight system (BLS) having the first light condensing section (X) and a second light condensing element (Y) were arranged in the structure of Fig. 20. Fig. 30 is a measurement result of an light condensation characteristic

in the structure of Fig. 20.

It is recognized from Fig. 30 that a transmission component through a collimation film at a large angle dramatically decreases with the help of first light condensation to thereby enable uncomfortable coloring to be eliminated.

Comparative Example

Used as a light condensing film was the cholesteric liquid crystal band pass filter of Example 2. The light condensing film was disposed on a dot printing light guide plate. A light condensation characteristic is as shown in Fig. 2, in which a strong peak of secondary transmission was observed.

Industrial Applicability

A light condensing system of the present invention can effectively shield light passing-through in an oblique direction to thereby suppress uncomfortable coloring, present a good display, realize cost reduction and be suitably applied in a transmission liquid crystal display.

## Claims

**1.** A light condensing system comprising:

a backlight system having a light source and a first light condensing section (X) capable of condensing emitted light from the light source within ±60° of the front direction; and

a light condensing film with no patterned structure as a second light condensing element (Y).

**2.** The light condensing system according to claim 1, wherein

the backlight system having the first light condensing section (X) is a light source and a microprism sheet array disposed on the light source.

**3.** The light condensing system according to claim 1, wherein

the backlight system having the first light condensing section (X) is a miroprism formed light guide combined with a light source.

**4.** The light condensing system according to claim 1, wherein

the backlight system having the first light condensing section (X) is a microdot formed light guide combined with a light source.

**5.** The light condensing system according to any of claims 1 to 4, wherein

the light condensing film used as the second light condensing element (Y) has no patterned structure; therefore, neither a moiré nor an interference fringe occurs between the light condensing film and a regular pattern of another optical member by applying the light condensing film to a liquid crystal cell when optical observation is conducted from the front side (a viewer side).

**6.** The light condensing system according to any of claims 1 to 5, wherein

the light condensing film used as the second light condensing element (Y) is a polarization element (A) in a structure in which a retardation layer (b) is disposed between at least two reflection polarizers (a) having respective polarized light selective reflection wavelength bands superimposing on each other.

**7.** The light condensing system according to claim 6, wherein

a reflection polarizer (a) is a circular polarization type reflection polarizer (a1) transmitting circularly polarized light but selectively reflecting a reverse circularly polarized light and

a retardation layer (b) has a retardation layer (b1) having a front retardation (in the normal direction) of almost zero and a retardation of $\lambda/8$ or more relative to incident light incoming in a direction inclined from the normal direction by 30° or more.

**8.** The light condensing system according to claim 6, wherein

the reflection polarizer (a) is a linear polarization type reflection polarizers (a2) transmitting one of linearly polarized lights perpendicular to each other, but selectively reflecting the other thereof,

the retardation layer (b) comprises a retardation layer (b1) having a front retardation (in the normal direction) of almost zero and a retardation of λ/4 or more relative to incident light incoming at a direction inclined from the normal direction by 30° or more,

layers (b2) each having a front retardation of about λ/4 disposed on both sides of the retardation layer (b1), one of the layers (b2) being disposed between the retardation layer (b1) and a corresponding linear polarization type reflection polarizer (a2) and the other of the layers (b2) being disposed between the retardation layer (b1) and another linear polarization type reflection polarizer (a2),

the layer (b2) on the incidence side is arranged at an angle of 45° (-45°) ±5° relative to the polarization axis of the linear polarization type reflection polarizer (a2) on the incidence side,

the layer (b2) on the emission side is arranged at an angle of - 45° (45°) ± 5° relative to the polarization axis of the linear polarization type reflection polarizer (a2) on the emission side, and

the layer (b2) on the incidence side and the layer (b2) on the emission side are arranged at an arbitrary angle formed between the respective slow axes thereof.

**9.** The light condensing system according to claim 6, wherein

the reflection polarizers (a) is a linear polarization type reflection polarizers (a2) each transmitting one of linearly polarized lights perpendicular to each other, but selectively reflecting the other thereof,

the retardation layer (b) comprises two biaxial retardation layers (b3) each having a front retardation of about λ/4 and an Nz factor of 2 or more,

the slow axis direction of the layer (b3) on the incidence side is arranged at an angle of 45° (-45°) ±5° relative to the polarization axis of the linear polarization type reflection polarizer (a2) on the incidence side,

the slow axis direction of the layer (b3) on the emission side is arranged at an angle of -45° (+45°) ±5° relative to the polarization axis of the linear polarization type reflection polarizer (a2) on the emission side, and

the layer (b3) on the incidence side and the layer (b3) on the emission side are arranged at an arbitrary angle formed between the respective slow axes thereof.

**10.** The light condensing system according to claim 6, wherein

the reflection polarizers (a) is a linear polarization type reflection polarizers (a2) each transmitting one of linearly polarized lights perpendicular to each other, but selectively reflecting the other thereof,

the retardation layer (b) comprises one biaxial retardation layer (b4) having a front retardation of about λ/2 and an Nz factor of 1.5 or more,

the slow axis direction of the layer on the incidence side is arranged at an angle of 45° (-45°) ±5° relative to the polarization axis of the linear polarization type reflection polarizer (a2) on the incidence side,

the slow axis direction of the layer on the emission side is arranged at an angle of -45° (45°) ±5° relative to the polarization axis of the linear polarization type reflection polarizer (a2) on the emission side, and

the polarization axes of the two linear polarization type reflection polarizers (a2) are almost perpendicular to each other.

**11.** The light condensing system according to any of claims 1 to 5,

wherein the light condensing film used as the second light condensing element (Y) is a band pass filter and the light source has a bright line spectrum.

**12.** The light condensing system according to claim 11, wherein

the band pass filter is an evaporation-deposited multilayer film band pass filter.

**13.** The light condensing system according to claim 11, wherein

the band pass filter is a cholesteric liquid crystal band pass filter.

**14.** The light condensing system according to claim 11, wherein

the band pass filter is a band pass filter constituted of a stretched film from a base material extruded in multilayer laminate made of resin materials having respective different refractive indexes.

**15.** The light condensing system according to claim 11, wherein

the band pass filter is a band pass filter constituted of a thin multilayer precision coating film made of resin materials having respective different refractive indexes.

**16.** A transmission liquid crystal display comprising at least:

a light condensing system according to any of claims 1 to 15;
a liquid crystal cell transmitting collimated lights; and
polarization plates disposed on both sides of the liquid crystal cell.

FIG.1

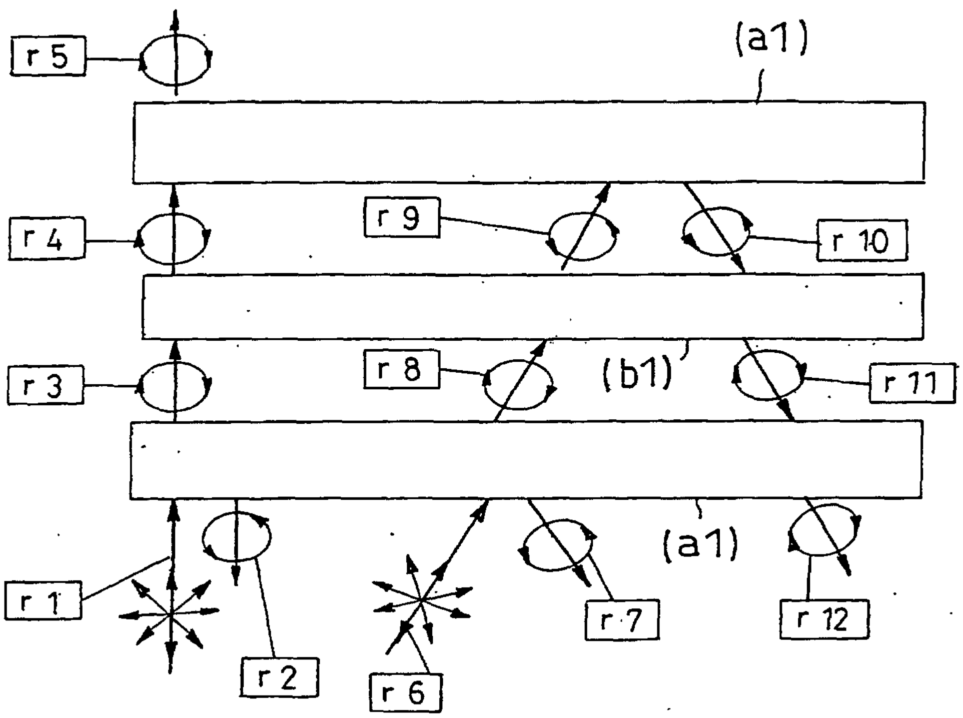


FIG.2

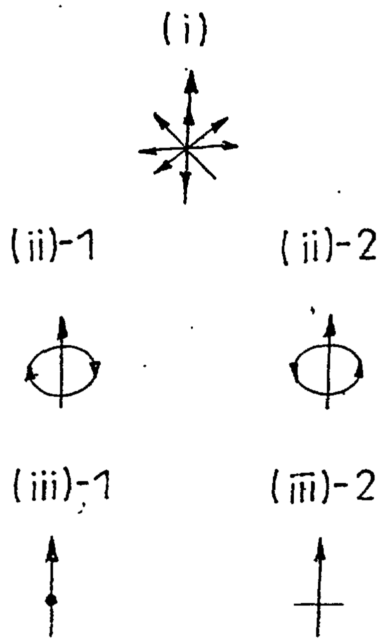

FIG.3

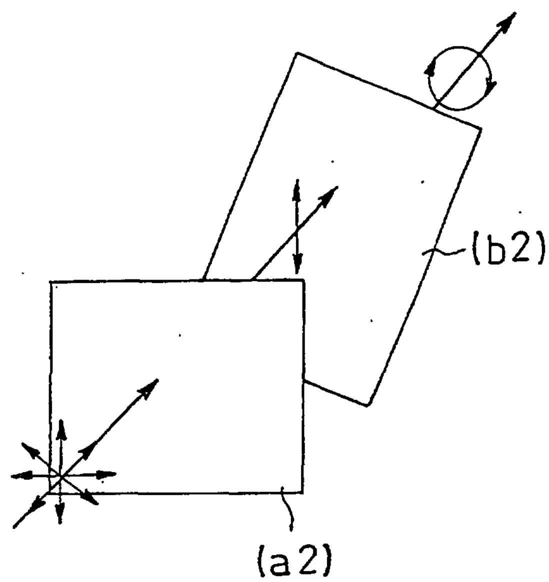

FIG.4

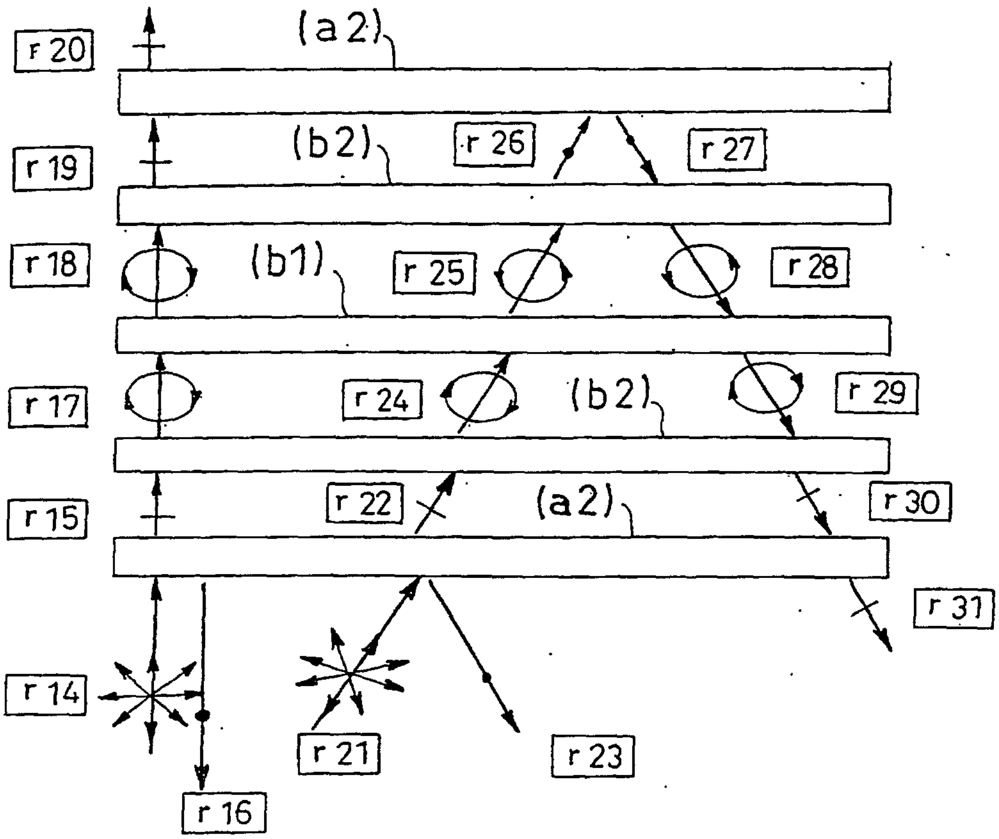
r 20
(a2)
r 19
(b2)
r 26
r 27
r 18
(b1)
r 25
r 28
r 17
r 24
(b2)
r 29
r 15
r 22
(a2)
r 30
r 31
r 14
r 21
r 23
r 16

FIG.5

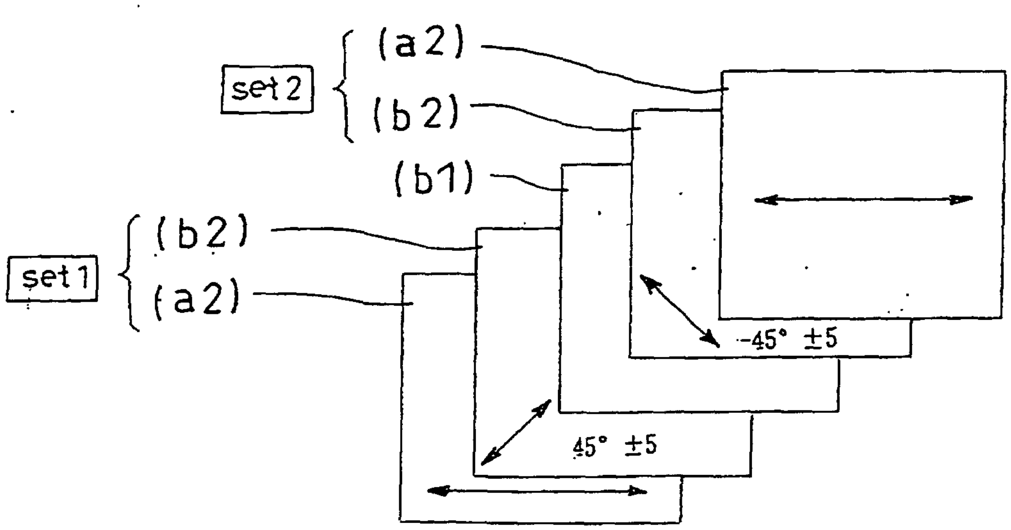
set 2
(a2)
(b2)
(b1)
set 1
(b2)
(a2)
-45° ±5
45° ±5

FIG.6

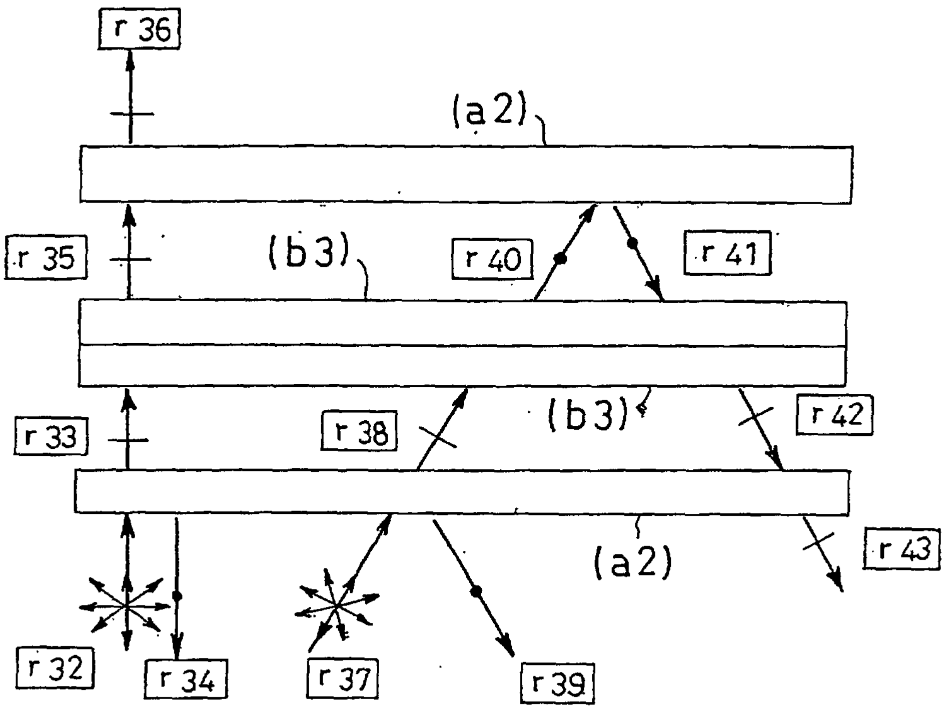
r 36
(a2)
r 35
(b3)
r 40
r 41
r 33
r 38
(b3)
r 42
(a2)
r 43
r 32
r 34
r 37
r 39

FIG.7

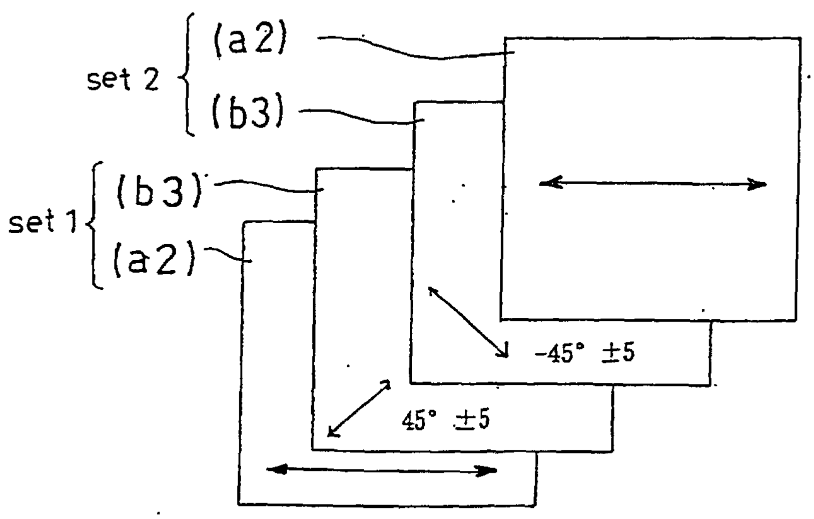
set 2
(a2)
(b3)
set 1
(b3)
(a2)
-45° ±5
45° ±5

FIG.8

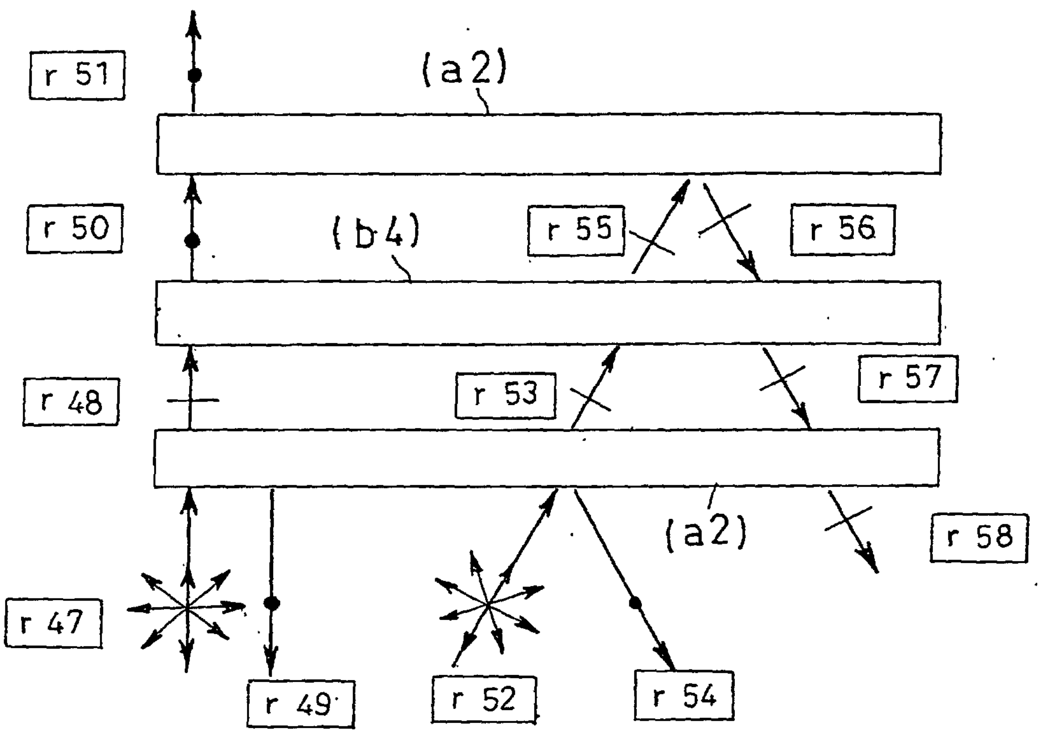
r 51
(a2)
r 50
(b4)
r 55
r 56
r 48
r 53
r 57
(a2)
r 58
r 47
r 49
r 52
r 54

FIG.9

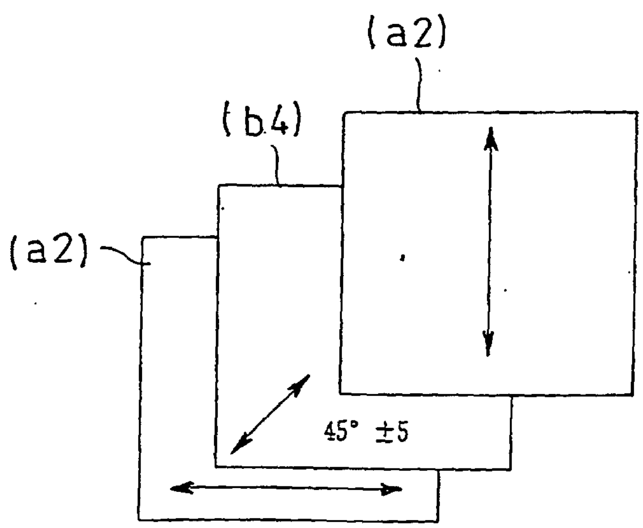
(a2)
(b4)
(a2)
45° ±5

FIG.10

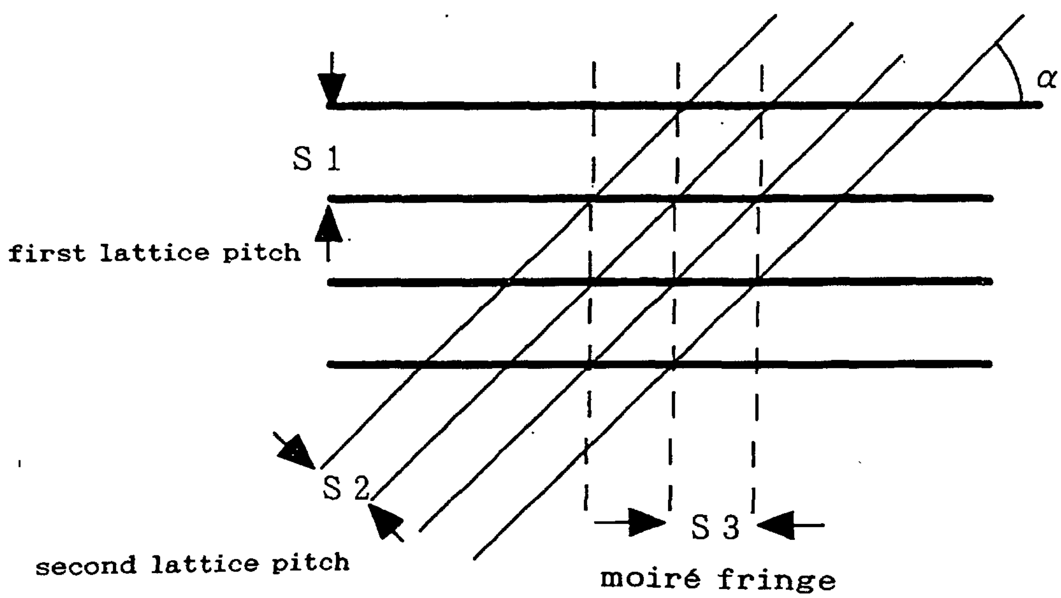
α
S 1
first lattice pitch
S 2
second lattice pitch
S 3
moiré fringe

FIG.11

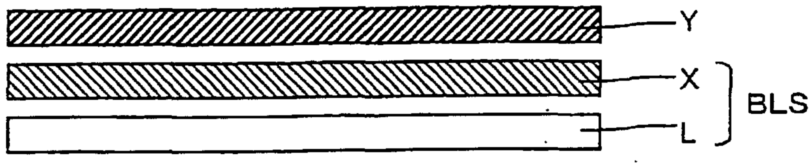


FIG.12

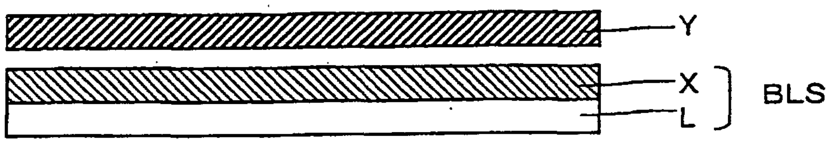


FIG.13

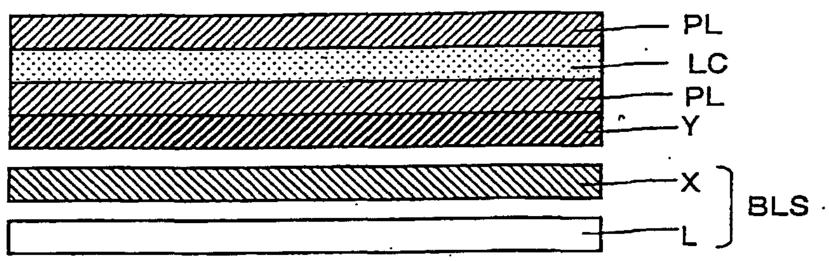


FIG.14

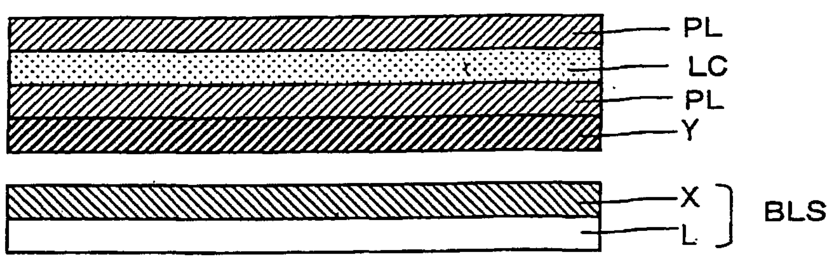

FIG.15

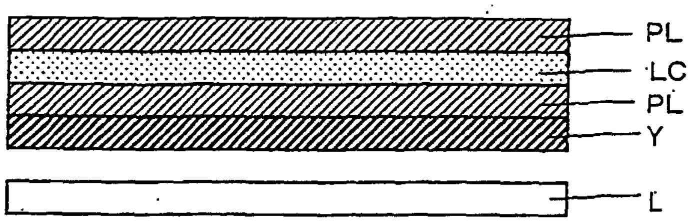


FIG.16

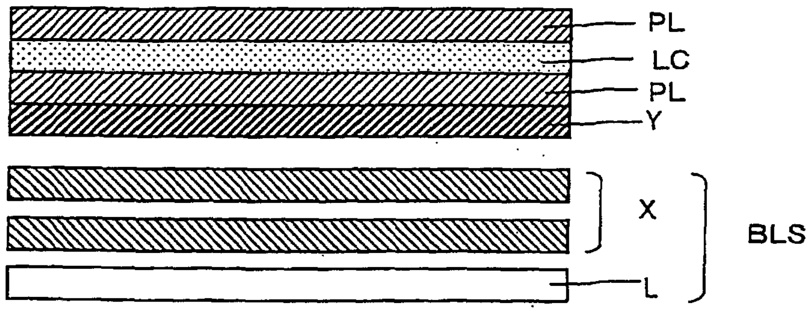


FIG.17

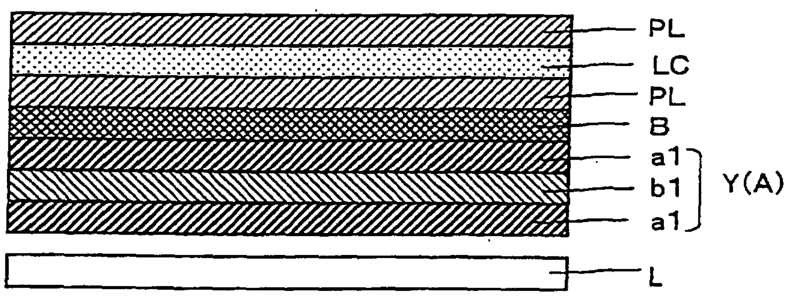


FIG.18

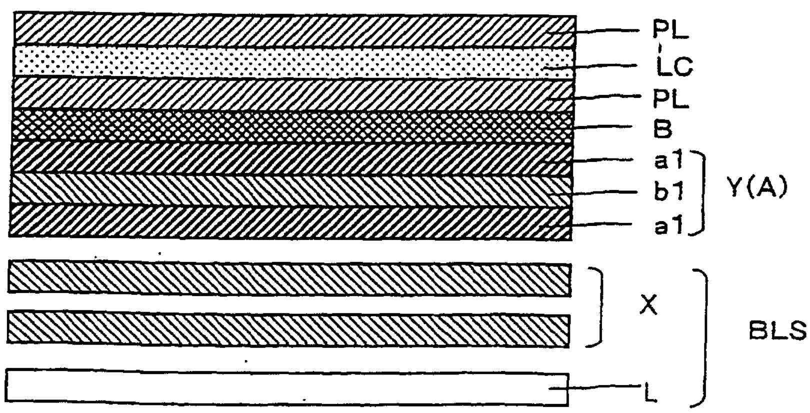

FIG.19

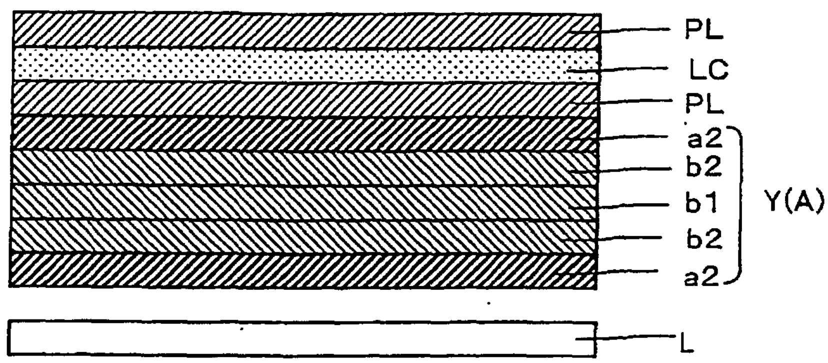


FIG.20

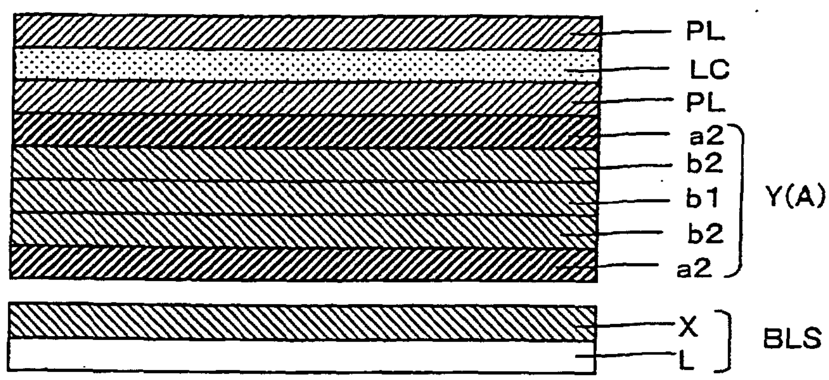

FIG.21

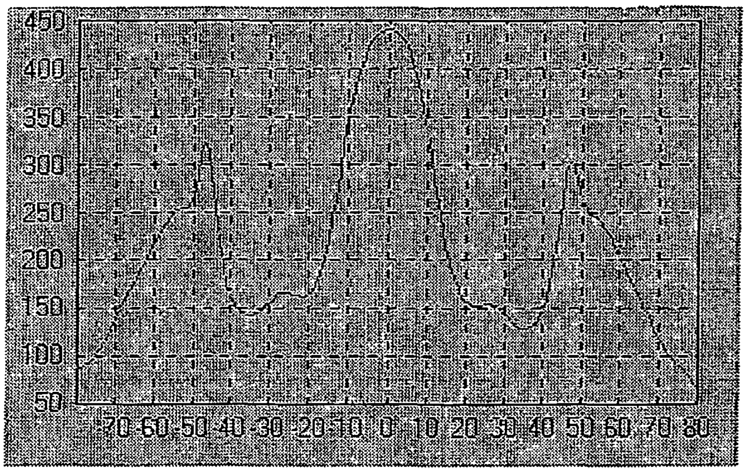
450
400
350
300
250
200
150
100
50
-70 -60 -50 -40 -30 -20 -10 0 10 20 30 40 50 60 70 80

FIG.22

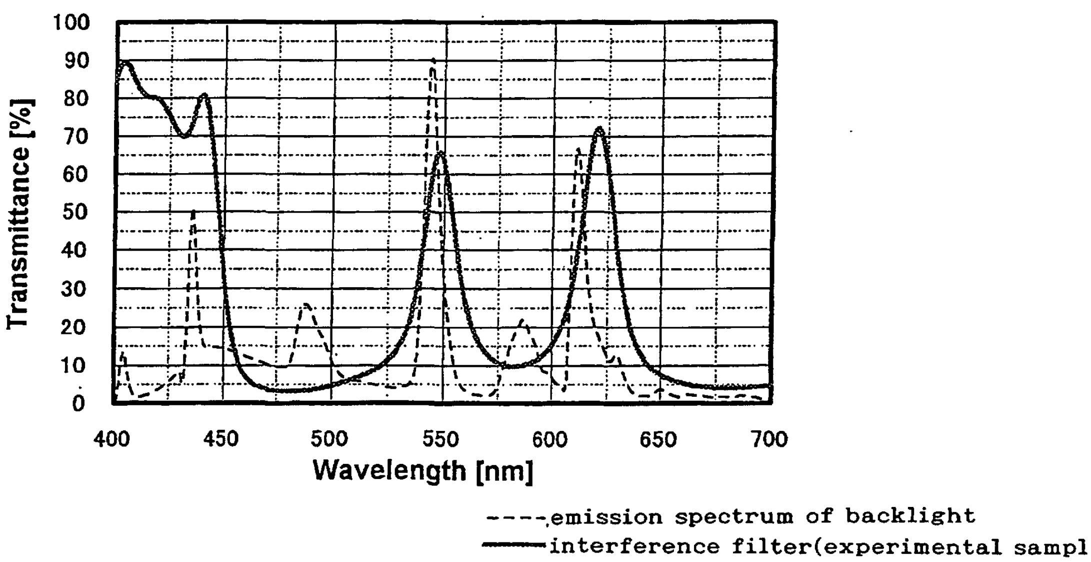
100
90
80
70
60
50
40
30
20
10
0
Transmittance [%]
400
450
500
550
600
650
700
Wavelength [nm]
----.emission spectrum of backlight
interference filter(experimental sampl

FIG.23

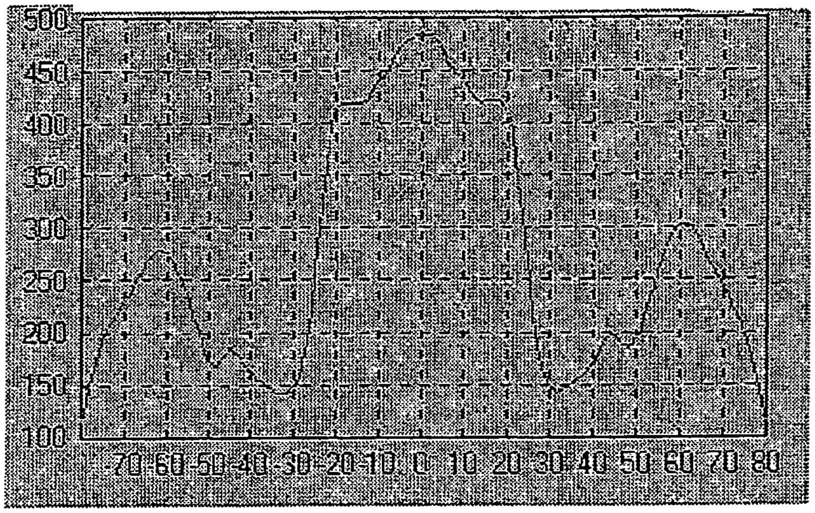
500
450
400
350
300
250
200
150
100
-70 -60 -50 -40 -30 -20 -10 0 10 20 30 40 50 60 70 80

FIG.24

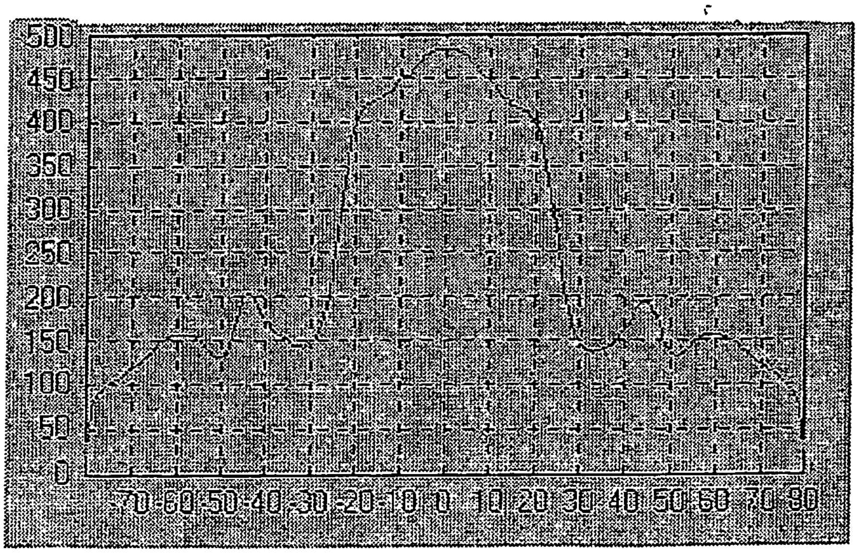
500
450
400
350
300
250
200
150
100
50
0
-70 -60 -50 -40 -30 -20 -10 0 10 20 30 40 50 60 70 80

FIG. 25

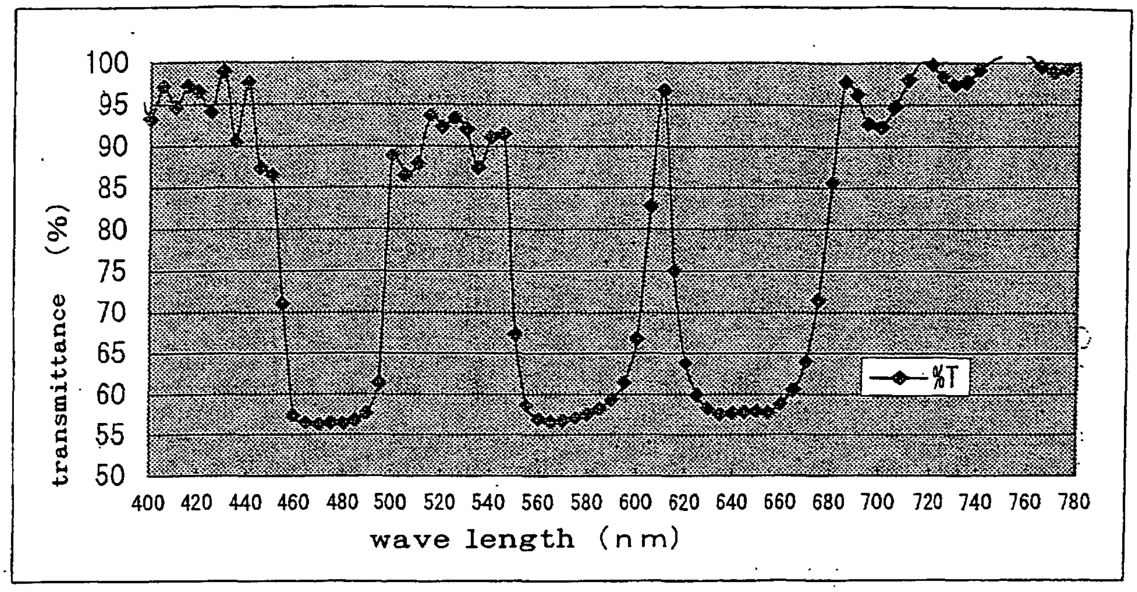
100
95
90
85
80
75
70
65
60
55
50
transmittance (%)
400 420 440 460 480 500 520 540 560 580 600 620 640 660 680 700 720 740 760 780
wave length (nm)
%T

FIG. 26

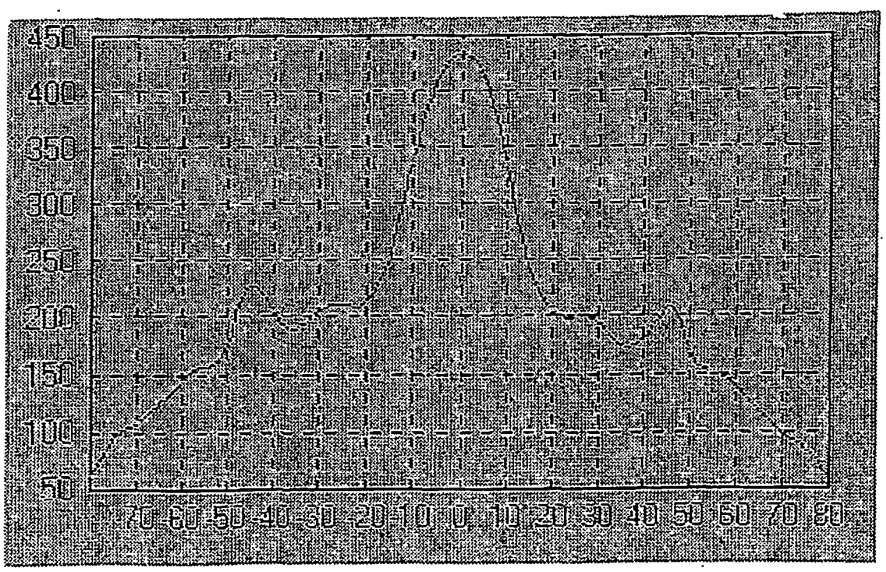
450
400
350
300
250
200
150
100
50
70 60 50 40 30 20 10 0 10 20 30 40 50 60 70 80

FIG.27

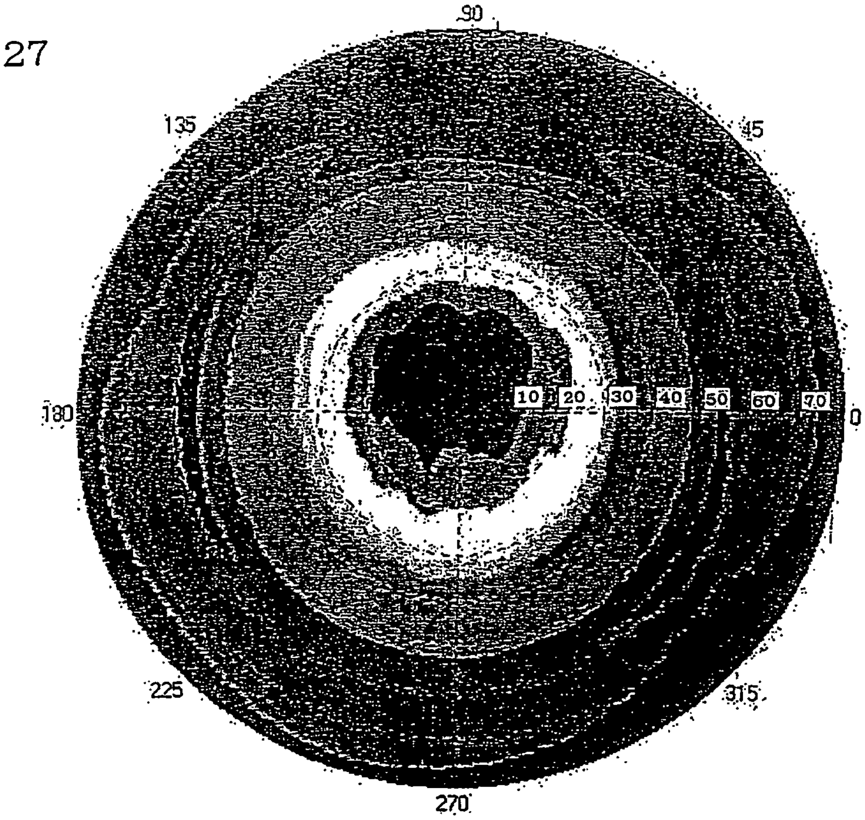
90
135
45
180
10
20
30
40
50
60
70
0
225
315
270

FIG.28

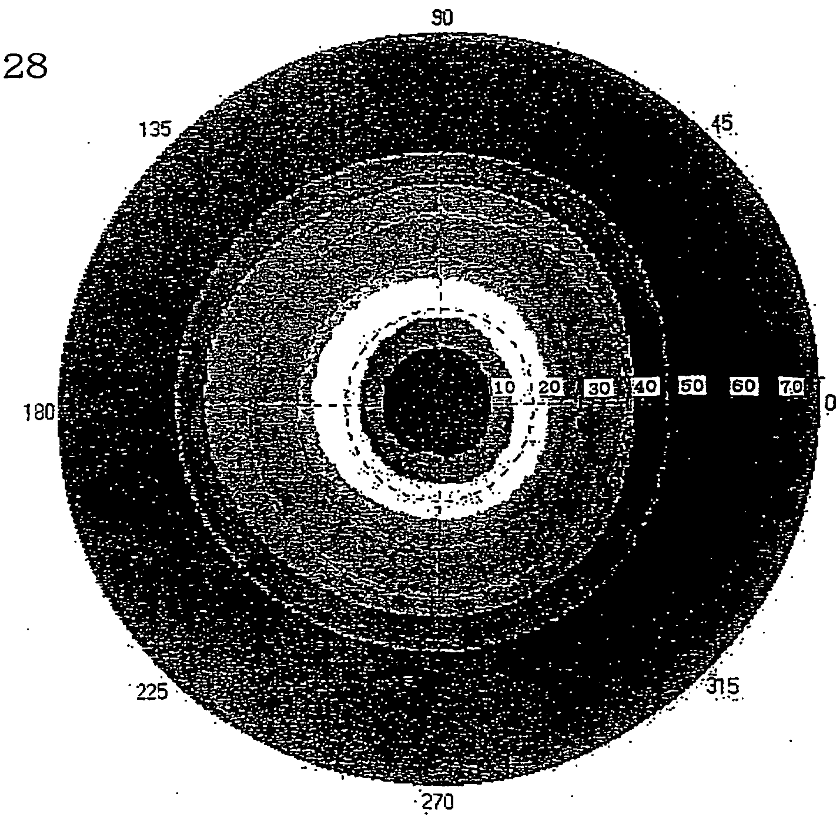
90
135
45
180
10
20
30
40
50
60
70
0
225
315
270

FIG.29

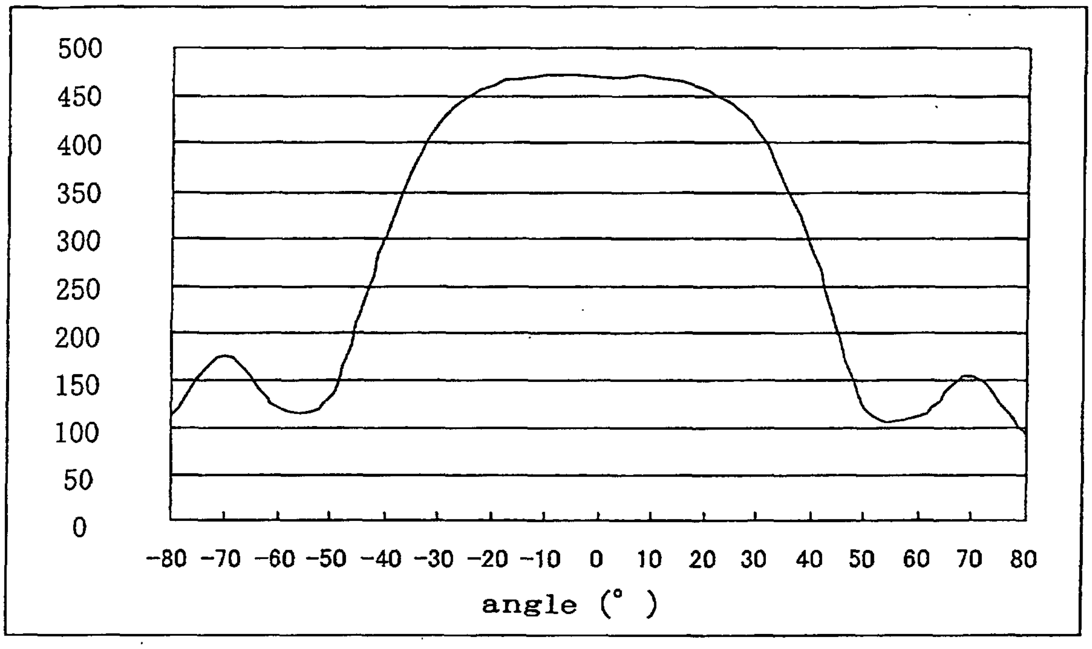
500
450
400
350
300
250
200
150
100
50
0
-80 -70 -60 -50 -40 -30 -20 -10 0 10 20 30 40 50 60 70 80
angle (° )

FIG.30

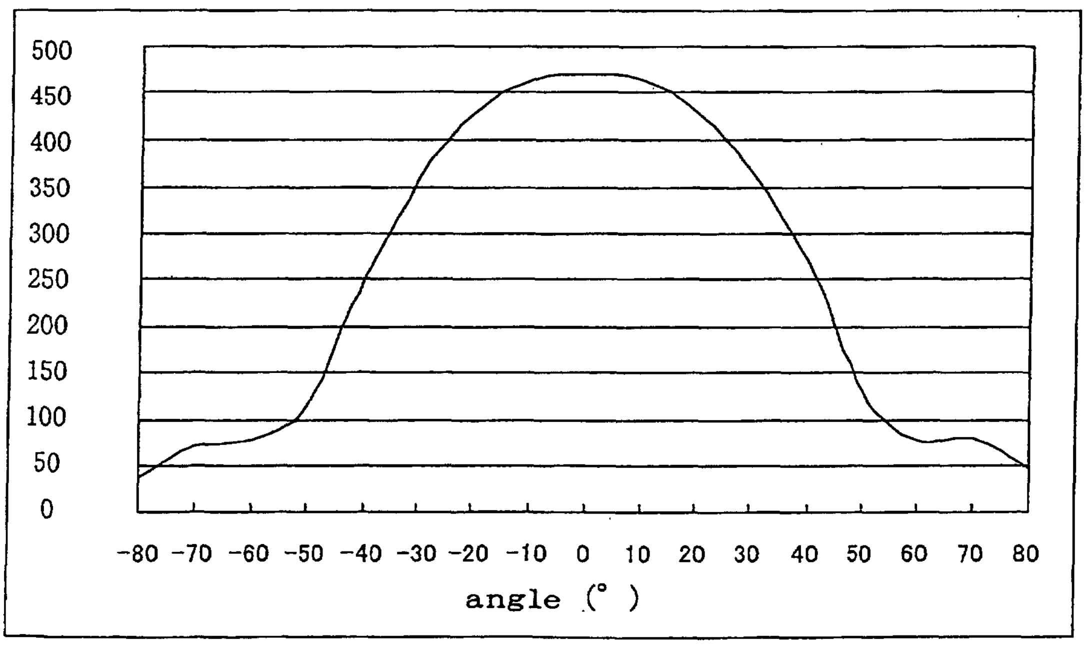
500
450
400
350
300
250
200
150
100
50
0
-80 -70 -60 -50 -40 -30 -20 -10 0 10 20 30 40 50 60 70 80
angle (° )

# INTERNATIONAL SEARCH REPORT

International application No.
PCT/JP03/04945

A. CLASSIFICATION OF SUBJECT MATTER
Int.Cl[7] G02F1/13357, G02F1/1335, G02F1/13363, G02B5/30, F21V8/00

According to International Patent Classification (IPC) or to both national classification and IPC

B. FIELDS SEARCHED

Minimum documentation searched (classification system followed by classification symbols)
Int.Cl[7] G02F1/13357, G02F1/1335, G02F1/13363

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2000-131683 A (Hitachi, Ltd.), 12 May, 2000 (12.05.00), Par. Nos. [0076] to [0082]; Figs. 1, 2 (Family: none) | 1-16 |
| A | JP 2002-90725 A (Matsushita Electric Industrial Co., Ltd.), 27 March, 2002 (27.03.02), Full text; all drawings & WO 01/31392 A1 | 1-16 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 May, 2003 (21.05.03) | 03 June, 2003 (03.06.03) |

| Name and mailing address of the ISA/ | Authorized officer |
|---|---|
| Japanese Patent Office | |
| Facsimile No. | Telephone No. |

Form PCT/ISA/210 (second sheet) (July 1998)